# EUROPEAN PATENT APPLICATION

(11) **EP 4 837 935 A1**
(43) Date of publication of application: **11.11.2026**
(21) Application number: 25752122.9
(22) Date of filing: 20.01.2025
(51) Int. Cl.: C08L 101/00, C08K 3/04, C08L 23/08, C08L 23/16, C08L 25/10, C08L 53/00, F16C 33/20

(54) **SLIDING RESIN COMPOSITION AND SLIDING RESIN MEMBER**

(30) Priority: 06.02.2024 JP 2024016250
(71) Applicant: Oiles Corporation, Kanagawa 252-0811 (JP)
(72) Inventor: SUEMITSU, Mayaka, Fujisawa-shi, Kanagawa 252-0811 (JP); TAKAHASHI, Kohei, Fujisawa-shi, Kanagawa 252-0811 (JP)
(74) Representative: Patentanwälte Bressel und Partner mbB
(86) International application number: PCT/JP2025/001546
(87) International publication number: WO 2025/169700

(57) **Abstract**

There are provided a sliding resin composition that reduces the generation of abnormal noise such as creaking noise even when molded into sliding members made of various resins by forming domains derived from formulation components in a predetermined non-uniform state, and the like.

A sliding resin composition and a sliding resin member derived therefrom, include at least the following components (A) and (B), wherein domains having a circle equivalent diameter of 10 µm or more derived from the component (B) are selected, and an average value (φ1) of the circle equivalent diameters of the selected domains is a value within a range of 10 to 30 µm:
(A) at least one main resin such as a polyacetal resin: 100 parts by weight
(B) an elastomer such as an olefin elastomer: 1 to 70 parts by weight.

## Description

### Technical Field

The present invention relates to a sliding resin composition and a sliding resin member (hereinafter sometimes referred to as a resin composition and a sliding member).

More particularly, the present invention relates to a sliding resin composition that reduces the generation of abnormal noise such as creaking noise even when molded into a sliding member derived from a sliding resin composition having domains formed non-uniformly, and a sliding resin member derived from the sliding resin composition.

### Background Art

Polyacetal resins, polyamide resins, polybutylene terephthalate resins and the like each have excellent mechanical properties, and also exhibit excellent sliding properties such as friction and wear properties, as well as heat resistance, chemical resistance and electrical properties, and are used as engineering plastics for resin compositions for sliding members in a wide range of fields, including automobile parts, electronic and electrical parts, and general industrial machine parts.

Here, although sliding members formed of polyacetal resins and the like have excellent self-lubricating properties and abrasion resistance, they have a relatively high coefficient of friction, and moreover, are prone to causing stick-slip due to fluctuations in the coefficient of friction during sliding, which in turn readily generate unpleasant sliding friction noise (squeak noise) caused by stick-slip.

Therefore, in order to further improve sliding properties, various resin compositions for sliding members and various sliding members derived therefrom have been proposed.

For example, a sliding resin composition which results in a sliding part that exhibits excellent sliding properties and abrasion resistance when used for a sliding part, regardless of whether the mating sliding part is made of a plastic or a metal, as well as a sliding part formed using the sliding resin composition, have been proposed (for example, refer to Patent Document 1).

More specifically, there are a sliding resin composition containing, with respect to 100 parts by weight of a polyacetal resin, an olefin elastomer in a range of 0.5 to 15 parts by weight, a fatty acid ester having 12 or more carbon atoms in a range of 0.1 to 5 parts by weight and a polytetrafluoroethylene fine powder in a range of 0.05 to 5 parts by weight and a polyacetal sliding resin member derived therefrom.

In addition, a polyamide resin composition that is suitably used to mold a sliding part, that is required to exhibit excellent moldability and heat resistance stability, as well as excellent sliding properties, particularly abrasion resistance in the presence of particles having a high hardness (hereinafter also referred to as dust) and sliding stability has been proposed (for example, refer to Patent Document 2).

More specifically, there is provided a polyamide resin composition for a sliding part that contains a crystalline polyamide resin (A), a modified polyolefin resin (B) having a reactive functional group that could react with a terminal group and/or a main chain amide group of the polyamide resin (A), a thermoplastic elastomer (C) having a reactive functional group that could react with a terminal group and/or a main chain amide group of the polyamide resin (A), an antioxidant (D), and a release agent (E), wherein the modified polyolefin resin (B) and the thermoplastic elastomer (C) are dispersed in a matrix of the polyamide resin (A) as domains having a particle size of 5 µm or less.

In addition, the applicant of the present invention has also proposed a sliding resin composition which, while maintaining favorable molding processability, reduces the generation of creaking noise when a sliding member is molded, and improves sliding properties including load-bearing capacity, low friction and abrasion resistance, and a sliding member derived therefrom (for example, refer to Patent Document 3).

More specifically, there are a sliding resin composition containing, in addition to a polyacetal resin as a main component, based on 100 wt% of the entire sliding resin composition, 1.5 to 7 wt% of an ethylene-propylene-diene rubber, 0.5 to 3 wt% of a saponified ethylene-vinyl acetate copolymer (a saponification degree of 50 to 100%), and 0.05 to 0.3 wt% of an ethylene-α-olefin copolymer, and containing no formaldehyde scavenger and no carbon material, and a sliding member derived therefrom.

### Related Art Documents

### Patent Documents

[Patent Document 1] JP 3200279 B2 (Claims, Example 1, etc.)
[Patent Document 2] JP 6872155 B2 (Claims, Example 1, etc.)
[Patent Document 3] JP 6864472 B2 (Claims, Example 1, etc.)

### Summary of the Invention

### Problems to be Solved by the Invention

However, the polyacetal resin composition and the sliding part derived therefrom described in Patent Document 1 have problems in that the main resin is limited to the polyacetal resin, the olefin elastomer should be dispersed in the form of fine particles, the versatility is poor, and furthermore, under more severe sliding conditions, the reduction of creaking noise is insufficient.

In addition, in order to reduce the size and weight of the parts, when a synthetic resin is selected as a slide mating material, and sliding friction between synthetic resins occurs, stick-slip is likely to occur, and the prevention of creaking noise caused by the stick-slip is not always sufficient.

Moreover, there are production problems such as a large number of types of essential components constituting the polyacetal resin composition, complicated molding conditions for obtaining a uniform mixed molded article, and necessity of temperature control of respective parts of a molding machine during molding.

In addition, in the sliding part described in Patent Document 2, the main resin should be limited to only the crystalline polyamide resin (A), and the modified polyolefin resin (B) having a predetermined functional group and the thermoplastic elastomer (C) having a predetermined functional group should be dispersed at 5 µm or less in the matrix of the crystalline polyamide resin (A), which results in a problem of poor versatility.

Moreover, the crystalline polyamide resin (A), the modified polyolefin resin (B) having a predetermined functional group, the thermoplastic elastomer (C) having a predetermined functional group, the antioxidant (D), and the release agent (E), which are formulation components, should be contained in predetermined formulation proportions and uniformly added, which results in a problem of difficulty in production management.

Furthermore, when predetermined formulation proportions vary during production, there is a problem in that it is difficult to control the reactivity between the crystalline polyamide resin (A) and the modified polyolefin resin (B) having a predetermined functional group and the thermoplastic elastomer (C) having a predetermined functional group.

Therefore, it is difficult to control the size (e.g. 5 µm or less) of the domains derived from these formulation components, and for that reason, the prevention of creaking noise caused by the stick-slip tends to be insufficient.

In addition, although the sliding member described in Patent Document 3 could improve sliding properties such as friction and wear properties, the main resin should be limited to the polyacetal resin alone.

Namely, there are constraints in that, based on 100 mass% of the entire polyacetal resin composition, 1.5 to 7 mass% of an ethylene-propylene-diene rubber, 0.5 to 3 mass% of a saponified ethylene-vinyl acetate copolymer and 0.05 to 0.3 mass% of an ethylene-α-olefin copolymer should be contained while formaldehyde scavengers and carbon materials should be substantially excluded.

In other words, there are problems in that, when a predetermined amount of carbon black is incorporated into the sliding member as a formaldehyde scavenger and a carbon material, the formulation composition becomes complicated, and when various resins other than the polyacetal resin are used as the main resin, the prevention of creaking noise caused by stick-slip is not always sufficient.

Therefore, in view of such problems, the inventors have conducted extensive studies, and as a result, found that, regardless of whether a predetermined amount of a carbon material is used, by controlling a circle equivalent diameter of a domain structure (hereinafter sometimes simply referred to as domains) derived from an olefin resin or the like as a component (B) and formed in a predetermined non-uniform state with a component (A) which is a main resin, sliding properties of a resin sliding component derived from a sliding resin composition are improved, and the generation of sliding friction noise (creaking noise) caused by stick-slip is prevented, and completed the present invention.

That is, an object of the present invention is to provide a sliding resin composition that reduces the generation of creaking noise and exhibits excellent sliding properties by using various resins as a main resin regardless of the polyacetal resin (A), dispersing and adding an olefin resin (B) and the like, and forming a domain structure in a predetermined non-uniform state, and a sliding member derived therefrom.

According to the present invention, there is provided a sliding resin composition containing at least the following components (A) and (B), wherein, when per unit area of an arbitrary cross section, domains having a circle equivalent diameter of 10 µm or more that are derived from the component (B) and non-uniformly dispersed in the component (A) are selected, an average value of the circle equivalent diameters of the selected domains (φ1, hereinafter referred to as an average value of domains having a circle equivalent diameter of 10 µm or more that are derived from the component (B) or sometimes simply referred to as an average value of predetermined domains) is a value within a range of 10 to 30 µm, and thus the above problems could be addressed. (A) at least one main resin selected from the group consisting of a polyacetal resin, a polyamide resin, a polybutylene terephthalate resin and a polycarbonate resin: 100 parts by weight (B) an olefin elastomer and a styrene elastomer, or either one of the elastomers: 1 to 70 parts by weight

When the sliding resin composition is formed in this manner, with respect to various resins serving as the component (A), which is a main resin, domains having a circle equivalent diameter of 10 µm or more derived from the component (B), which are measured by an image analysis method or the like, could be dispersed in a predetermined non-uniform state.

Further, when the domains derived from the component (B) having a circle equivalent diameter of 10 µm or more are interposed on the sliding surface, even under more severe sliding conditions, the sticking (adhesion) of the resin composition could be controlled, the generation of stick-slip is reduced, and the generation of creaking noise is reduced.

Therefore, by controlling the average value (φ1) of the predetermined domains and the like, the generation of creaking noise caused by stick-slip and the like could be reduced, and excellent sliding properties could be exhibited over a long period.

Here, the state in which the domains are non-uniformly dispersed means a state in which the particle size distribution of the domains measured using an image analysis method or the like is not concentrated in a narrow range. For example, it could be identified when the standard deviation (σ) of the circle equivalent diameters is as wide as 0.8 µm or more in all domains per unit area measured by an image analysis method.

Further, the average value (φ1) of the predetermined domains serves as an index indicating that the domain structure is in a non-uniform state, and it could usually be accurately measured and calculated under predetermined conditions using an image analysis method.

In addition, when the sliding resin composition of the present invention is formed, it is preferable to select at least five domains n1 to n5 in descending order of circle equivalent diameter, per unit area, among the domains derived from the component (B) so that the average value of the circle equivalent diameters of the selected domains (φ2, hereinafter sometimes referred to as an average value of at least five domains, in descending order of size, derived from the component (B) or simply as a maximum particle size of predetermined domains) is a value within a range of 10 to 130 µm.

That is, when the sliding resin composition is formed in this manner, the domain structure of the component (B) could be quantitatively controlled with respect to the component (A) to achieve a domain structure in a predetermined non-uniform state. Therefore, the generation of creaking noise caused by stick-slip and the like could be reduced, and excellent sliding properties could be exhibited.

Further, the maximum particle size (φ2) of the predetermined domains also serves as one index indicating that the domains are in a non-uniform state, and it could usually be accurately measured using an image analysis method.

Thus, it has been separately found that, when the number of domains for which a predetermined circle equivalent diameter is measured is increased sequentially from one point, the sliding properties reach saturation at around 4 or 5 points and exhibit a certain value.

In addition, when the sliding resin composition of the present invention is formed, it is preferable to set, per unit area, the area ratio (φ3, hereinafter referred to as an area ratio of domains having a circle equivalent diameter of 10 µm or more derived from the component (B) or sometimes simply referred to as an area ratio of predetermined domains) of domains having a circle equivalent diameter of 10 µm or more derived from the component (B) to a value within a range of 0.5 to 20%.

When the sliding resin composition is formed in this manner, the dispersibility of the component (B) in the component (A) could be quantitatively controlled so that the component (B) is non-uniformly dispersed, and thus the generation of creaking noise caused by stick-slip and the like could be reduced, and excellent sliding properties could be exhibited over a long period.

In addition, the area ratio (φ3) of the predetermined domains also serves as an index indicating that the domains are in a non-uniform state, and it could usually be accurately measured using an image analysis method.

In addition, when the sliding resin composition of the present invention is formed, it is preferable that it further contain, as a component (C), a lubricant agent, and that the amount of the component (C) added with respect to 100 parts by weight of the component (A) be a value within a range of 0.1 to 10 parts by weight.

When a predetermined amount of the lubricant agent as the component (C) is added in this manner, even when various resins are used as the main resin and molded into a sliding resin member, the generation of creaking noise caused by stick-slip and the like could be further reduced, and excellent sliding properties could be exhibited over a long period.

In addition, when the sliding resin composition of the present invention is formed, it is preferable that it further contain, as a component (D), a polyolefin resin other than the component (B), and that the amount of the polyolefin resin added with respect to 100 parts by weight of the component (A) would be a value within a range of 1 to 10 parts by weight.

When a predetermined amount of the polyolefin resin is added as the component (D) in this manner, it contributes to appropriate dispersion of various formulation components, including the component (B). Therefore, even when molded into a sliding resin member, the generation of creaking noise caused by stick-slip and the like could be further reduced, and excellent sliding properties could be exhibited over a long period.

In addition, when the sliding resin composition of the present invention is formed, it is preferable that it further contain, as a component (E), a carbon material, and that the amount of the component (E) added with respect to 100 parts by weight of the component (A) be a value within a range of 0.01 to 10 parts by weight.

Carbon black and the like of the carbon material component (E) absorb and adsorb the lubricant and contribute to more appropriate dispersion. Therefore, even when molded into a sliding resin member, the generation of creaking noise caused by stick-slip and the like could be further reduced over a long period.

In addition, when the sliding resin composition of the present invention is formed, the melt flow rate of the component (A) is preferably a value within a range of 3 to 100 g/10 min.

If the component (A) having such flow characteristics is used, even when a general kneading machine such as an extruder is used, the non-uniformly dispersed state of the component (B) and the like could be more reliably and stably formed.

In addition, when the sliding resin composition of the present invention is formed, the component (B) is preferably at least one resin selected from the group consisting of an ethylene-propylene copolymer (EPM), an ethylene-propylene-diene copolymer (EPDM), an ethylene-1-butene copolymer (EBR), an ethylene-vinyl acetate copolymer (EVA), an olefin-ethylene butylene-olefin block copolymer (CEBC), a styrene-butadiene copolymer (SBR), and a styrene-ethylene butylene-styrene copolymer (SEBS).

Further, regarding the kind of resin, it is preferable to use any resin having a Mooney viscosity ML(1+4) at 100°C of 40 to 110, a Mooney viscosity ML(1+4) at 125°C of 20 to 80, or a melt flow rate (190°C, 2.16 kg) value within a range of below 3 g/10 min.

When the sliding resin composition is formed in this manner in consideration of the Mooney viscosity of the component (B) and the like, even when a general kneading machine such as an extruder is used, it is possible to appropriately control the size of domains having a circle equivalent diameter of 10 µm or more derived from the component (B) and the like, and it is possible to more reliably and stably form a non-uniformly dispersed state.

In addition, another aspect of the present invention is a sliding resin member including, as a constituent component, a sliding resin composition containing the following components (A) and (B) and in which at least domains having a circle equivalent diameter of 10 µm or more derived from the component (B) are dispersed in a predetermined non-uniform state in the component (A).

Further, in the sliding resin member, per unit area, when domains having a circle equivalent diameter of 10 µm or more derived from the component (B) are selected, an average value (φ1) of the circle equivalent diameters of the selected domains is a value within a range of 10 to 30 µm.
(A) at least one main resin selected from the group consisting of a polyacetal resin, a polyamide resin, a polybutylene terephthalate resin and a polycarbonate resin: 100 parts by weight
(B) an olefin elastomer and a styrene elastomer, or either one of the elastomers: 1 to 70 parts by weight.

When the sliding resin member is formed in this manner, various resins are used as the main resin, regardless of whether a carbon material is added, domains having a circle equivalent diameter of 10 µm or more derived from the component (B) could be dispersed in a predetermined non-uniform state in the component (A).

Therefore, the generation of creaking noise caused by stick-slip and the like could be reduced and excellent sliding properties could be exhibited over a long period.

Namely, unless otherwise specified, the average value (φ1) of the predetermined domains, the maximum particle size (φ2), and the area ratio (φ3) of the predetermined domains are values per unit area.

### Brief Description of Drawings

FIG. 1(a) is a diagram for illustrating the relationship between an average value (φ1 (µm)) of domains having a circle equivalent diameter of 10 µm or more derived from the component (B) and an allowable surface pressure (MPa) in a sliding resin composition.
FIG. 1(b) is a diagram for illustrating the relationship between the average value (φ1 (µm)) of domains in a similar sliding resin composition and an allowable surface pressure (MPa), except for the use of a sliding resin composition containing a carbon material.
FIG. 2(a) is a diagram for illustrating the relationship between an average value (φ2 (µm)) of five domains, in descending order of size, derived from the component (B) and an allowable surface pressure (MPa) in the sliding resin composition.
FIG. 2(b) is a diagram for illustrating the relationship between an average value (φ2 (µm)) of five domains, in descending order of size, and an allowable surface pressure (MPa) in a similar sliding resin composition, except for the use of a sliding resin composition containing a carbon material.
FIG. 3(a) is a diagram for illustrating the manner in which five domains derived from the component (B) are selected in descending order of size and an average value (φ2 (µm)) thereof is calculated in the present invention (Example 5).
FIG. 3(b) shows a diagram (image) for illustrating the manner in which five domains derived from the component (B) are selected in descending order of size, and an average value (φ2 (µm)) thereof is calculated in Comparative Example 1.
FIG. 4(a) is a diagram for illustrating the relationship between the area ratio (φ3 (%)) of the predetermined domains and the allowable surface pressure (MPa) in the sliding resin composition.
FIG. 4(b) is a diagram for illustrating the relationship between the area ratio (φ3 (%)) of the predetermined domains and the allowable surface pressure (MPa) in a similar sliding resin composition, except for the use of a sliding resin composition containing a carbon material.
FIG. 5(a) is a diagram for illustrating the relationship between the maximum particle size (φ2 (µm)) of the predetermined domains and the average value (φ1 (µm)) of the predetermined domains in the sliding resin composition.
In addition, FIG. 5(b) is a diagram for illustrating the relationship between the average value (φ1 (µm)) of the predetermined domains and the area ratio (φ3 (%)) of the predetermined domains in the sliding resin composition.
In addition, FIG. 5(c) is a diagram for illustrating the relationship between the maximum particle size (φ2 (µm)) of the predetermined domains and the area ratio (φ3 (%)) of the predetermined domains in the sliding resin composition.

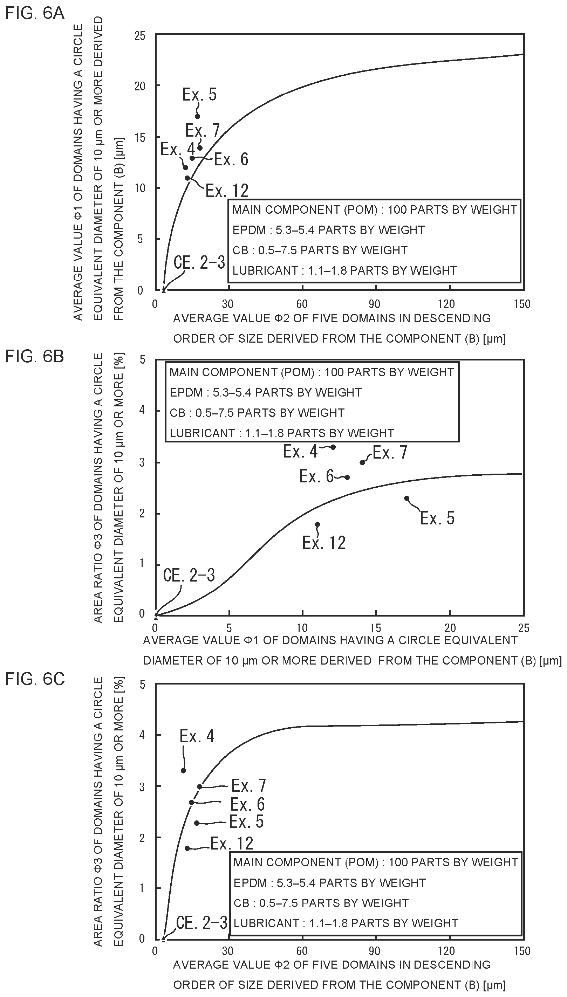

FIGS. 6(a) to 6(c) are diagrams for illustrating the relationships among the average value (φ1 (µm)) of the predetermined domains, the maximum particle size (φ2 (µm)) of the predetermined domains, and the area ratio (φ3 (%)) of the predetermined domains in a similar sliding resin composition, except for the use of a sliding resin composition containing a carbon material.

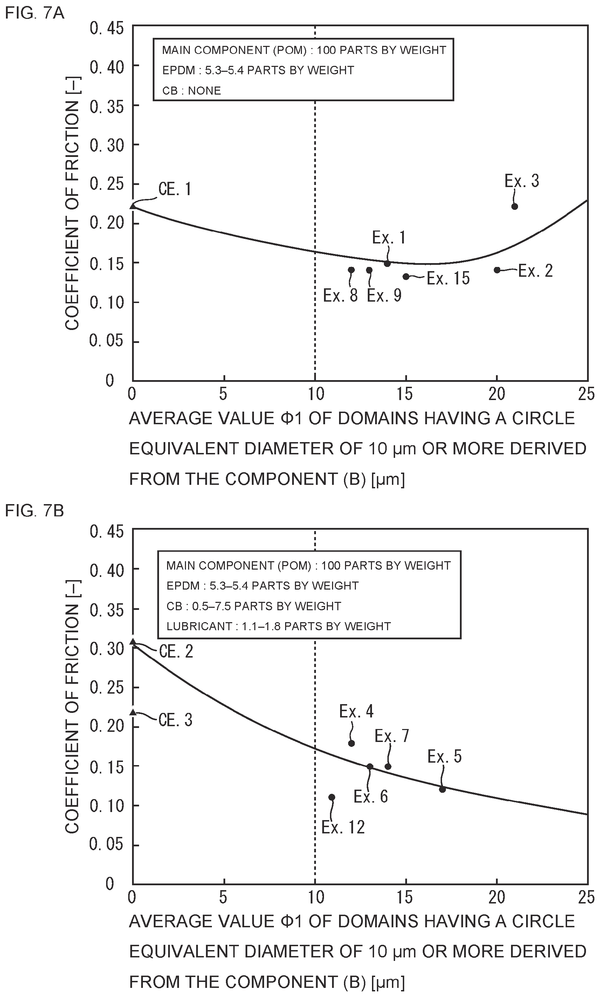

FIG. 7(a) is a diagram for illustrating the relationship between the average value (φ1 (µm)) of the predetermined domains and the coefficient of friction (-) in the sliding resin composition.
FIG. 7(b) is a diagram for illustrating the relationship between the average value (φ1 (µm)) of the predetermined domains and the coefficient of friction (-) in a similar sliding resin composition, except for the use of a sliding resin composition containing a carbon material.

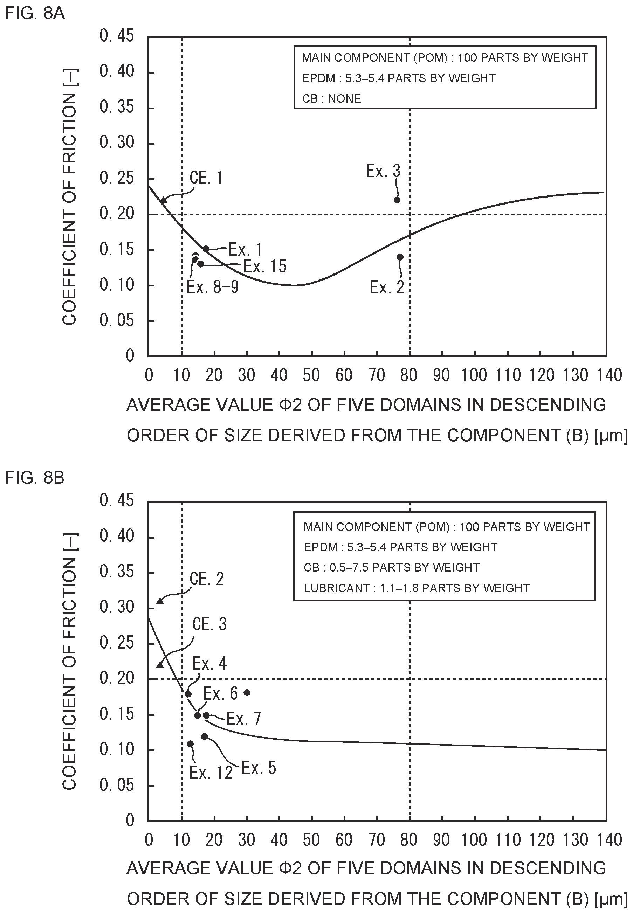

FIG. 8(a) is a diagram for illustrating the relationship between the maximum particle size (φ2 (µm)) of the predetermined domains and the coefficient of friction (-) in the sliding resin composition, and FIG. 8(b) is a diagram for illustrating the relationship between the maximum particle size (φ2 (µm)) of the predetermined domains and the coefficient of friction (-) in a similar sliding resin composition, except for the use of a sliding resin composition containing a carbon material.

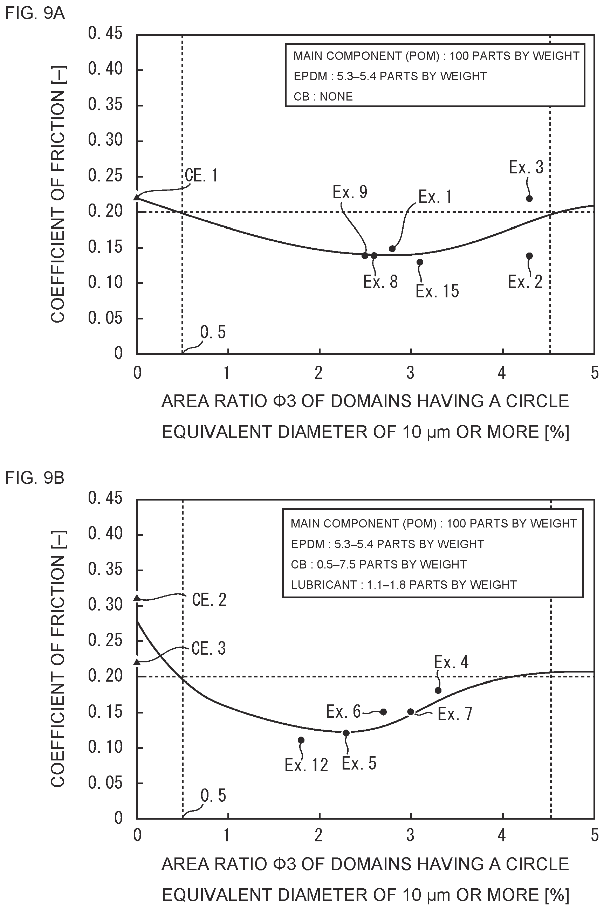

FIG. 9(a) is a diagram for illustrating the relationship between the area ratio (φ3 (%)) of the predetermined domains and the coefficient of friction (-) in the sliding resin composition, and FIG. 9(b) is a diagram for illustrating the relationship between the area ratio (φ3 (%)) of the predetermined domains and the coefficient of friction (-) in a similar sliding resin composition, except for the use of a sliding resin composition containing a carbon material.

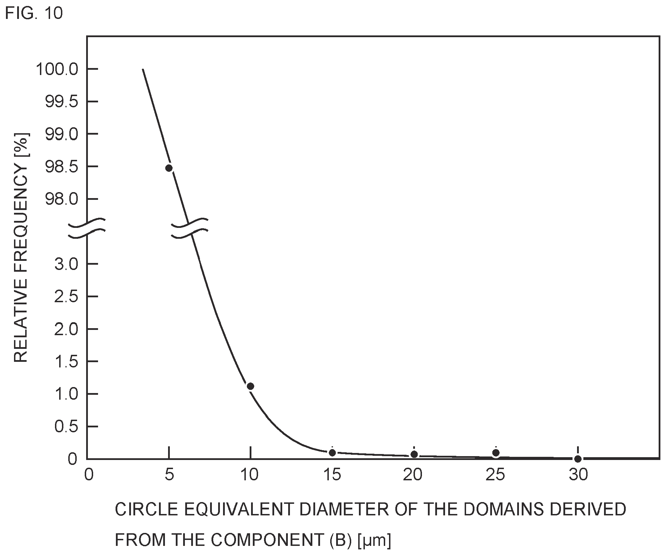

FIG. 10 is a diagram for illustrating the relationship between the circle equivalent diameter (µm) of the domains derived from the component (B) and the relative frequency (%) in the present invention (Example 5).

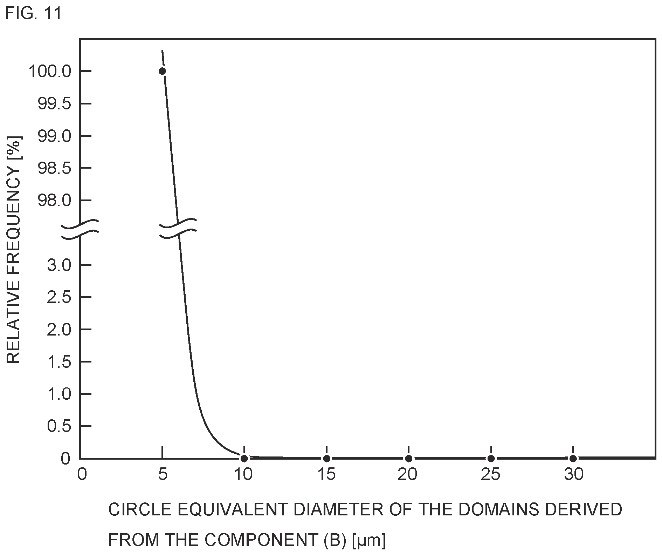

FIG. 11 is a diagram for illustrating the relationship between the circle equivalent diameter (µm) of the domains derived from the component (B) and the relative frequency (%) in Comparative Example 3.

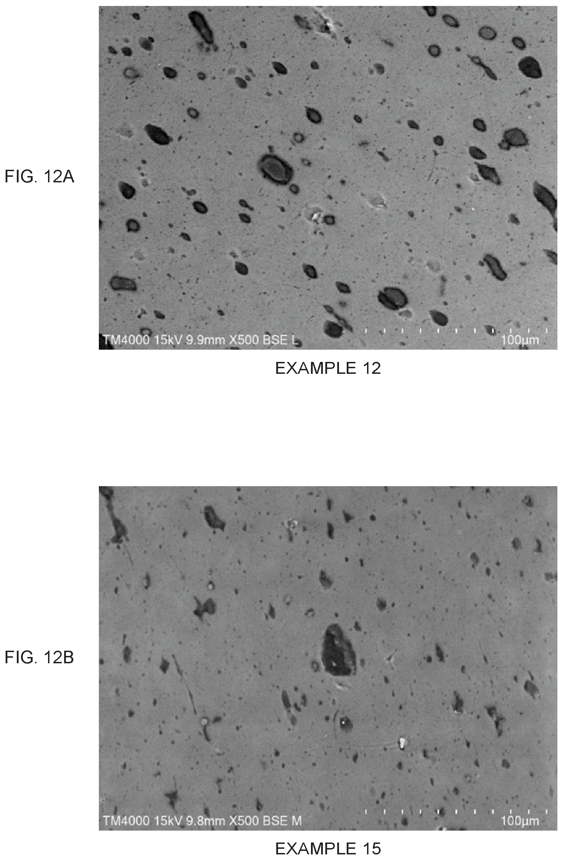

FIGS. 12(a) and 12(b) are diagrams for illustrating the non-uniformly dispersed state of the domains derived from the component (B) in the present invention (Example 12 and Example 15).

### Embodiments for Carrying out the Invention

### [First embodiment]

A first embodiment provides a sliding resin composition containing at least the following components (A) and (B), wherein, when per unit area, domains having a circle equivalent diameter of 10 µm or more derived from the component (B) and non-uniformly dispersed in the component (A) are selected, and an average value (φ1) of the circle equivalent diameters of the selected domains is a value within a range of 10 to 30 µm, and thereby the above problems could be addressed.
(A) at least one main resin selected from the group consisting of a polyacetal resin, a polyamide resin, a polybutylene terephthalate resin and a polycarbonate resin: 100 parts by weight
(B) an olefin elastomer and a styrene elastomer, or either one of the elastomers: 1 to 70 parts by weight.

Hereinafter, the sliding resin composition according to the first embodiment will be described in detail with reference to the drawings as appropriate.

### 1. Component (A)

### (1) Kind

The kind of the component (A) includes at least one main resin selected from the group consisting of a polyacetal resin (POM), a polyamide resin (PA), a polybutylene terephthalate resin (PBT), and a polycarbonate resin (PC).

Among these, the polyacetal resin is a polymer compound whose main structural unit is an oxymethylene group (-CH₂O-), and the polyacetal resin includes a polyacetal homopolymer formed of only an oxymethylene unit and a polyacetal copolymer containing an oxymethylene unit and a comonomer unit.

Further, although both the polyacetal homopolymer and the polyacetal copolymer could be used, it could be said that the polyacetal copolymer is more preferable in consideration of thermal stability.

Specific examples of such polyacetal homopolymers include "Delrin" (product name, commercially available from DuPont, USA.) and "TENAC" (product name, commercially available from Asahi Kasei Corporation). Specific examples of polyacetal copolymers include "Duracon" (product name, commercially available from Polyplastics Co., Ltd.), "Iupital" (commercially available from Global Polyacetal Co., Ltd.), and "TENAC C" (commercially available from Asahi Kasei Corporation).

In addition, the polyamide resin (nylon) is a polymer compound having an amide bond (-NH-CO-) in the main chain. Examples thereof include an aliphatic polyamide, an aromatic polyamide, and a fully aromatic polyamide.

Specific examples of such polyamide resins include aliphatic nylons having a melting point of 150°C or higher and excellent heat resistance and strength, such as polycaproamide (nylon 6), polyhexamethylene adipamide (nylon 66), polytetramethylene adipamide (nylon 46), polytetramethylene sebacamide (nylon 410), polyhexamethylene sebacamide (nylon 610), polyhexamethylene dodecamide (nylon 612), polydecamethylene sebacamide (nylon 1010), polydecamethylene dodecamide (nylon 1012), polyundecanamide (nylon 11), polydodecanamide (nylon 12), and a polycaproamide/polyhexamethylene adipamide copolymer (nylon 6/66); and semi-aromatic nylons obtained by polymerization of an aliphatic and/or alicyclic diamine and an aromatic carboxylic acid, an aromatic diamine and an aliphatic and/or alicyclic dicarboxylic acid, a mixture thereof, or these and a lactam or an aminocarboxylic acid, such as polyhexamethylene terephthalamide (nylon 6T), polyhexamethylene isophthalamide (nylon 6I), polymetaxylylene adipamide (nylon MXD6), polymetaxylylene sebacamide (nylon MXD10), polynonamethylene terephthalamide (nylon 9T), and polydecamethylene terephthalamide (nylon 10T).

Specific examples of such polyamide (nylon) resins include Nylon 6, Nylon 66, and Nylon 610 (product name "Amilan," commercially available from Toray Industries, Inc.), Nylon 66 (product name "LEONA," commercially available from Asahi Kasei Corporation), Nylon 6 and Nylon 66 (product name "Zytel," commercially available from DuPont Inc.), and Nylon 11 and Nylon 12 (product name "Rilsan," commercially available from Arkema).

In addition, the polybutylene terephthalate resin (PBT) is a polymer compound produced by condensation polymerization of terephthalic acid or dimethyl terephthalate with 1,4-butanediol, and is a kind of polyester.

Here, specific examples of polybutylene terephthalate resins include "NOVADURAN" (commercially available from Mitsubishi Chemical Corporation), "Toraycon" (commercially available from Toray Industries, Inc.), and "DURANEX" (commercially available from Polyplastics Co., Ltd.).

In addition, the polycarbonate resin (PC) is a polymer compound produced by an interfacial polymerization method using bisphenol A and carbonyl chloride as monomers or by a melt polymerization method via transesterification of bisphenol A and diphenyl carbonate.

Here, specific examples of polycarbonate resins include "TARFLON" (commercially available from Idemitsu Kosan Co., Ltd.), "Kotex" (commercially available from Kotec Corporation), "LEXAN Resin" (commercially available from SABIC Japan), and "Iupilon" (commercially available from Mitsubishi Engineering-Plastics Corporation).

### (2) Melt flow rate (MFR)

In addition, the MFR of the component (A) is preferably a value within a range of 3 to 100 g/10 min.

This is because, when the MFR of the component (A) is a value of below 3 g/10 min, it may become difficult to obtain favorable moldability during resin molding or low-molecular-weight components may easily bleed out. In addition, this is because a smaller viscosity difference with the component (B) makes it harder to achieve a predetermined non-uniformly dispersed state.

On the other hand, this is because, when the MFR of the component (A) is a value exceeding 100 g/10 min, although favorable moldability is obtained, durability and mechanical properties may significantly decrease when a sliding member is formed.

Therefore, the MFR is more preferably a value within a range of 5 to 50 g/10 min, and still more preferably a value within a range of 7 to 30 g/10 min.

Here, the melt flow rate (MFR) could be measured according to ISO 1133 (JIS K 7210), and is measured as an outflow weight per unit time under test conditions specified for each material. The test conditions specified for each material are a temperature of 190°C and a load of 2.16 kg (JIS K 7364-2) for the polyacetal resin, and a temperature of 300°C and a load of 1.2 kg (JIS K 6719-2) for the polycarbonate resin.

On the other hand, in cases where there are no specified test conditions, such as for the polyamide resin and the polybutylene terephthalate resin, values measured at a temperature 10 to 20°C lower than the melting (resin) temperature (PA: JIS K 6920-2, PBT: JIS K 6937-2) under injection molding conditions for each material, and a load of 2.16 kg are used.

### 2. Component (B)

### (1) Kind

As the component (B), a predetermined amount of an olefin elastomer and a styrene elastomer, or either one of the elastomers is added to the component (A) which is a main resin.

Here, it is preferable to use the materials listed below alone, but it is also preferable to use a plurality thereof. This is because, for example, when the component (B) dispersed at 10 µm or more and the component (B) dispersed at below 10 µm are used in combination, a higher allowable surface pressure could be achieved.

Examples of olefin elastomers include at least one of ethylene copolymers and diene copolymers.

Examples of ethylene copolymers include, but are not limited to, copolymers of ethylene and α-olefin, copolymers of ethylene, α-olefin and diene, copolymers of ethylene and carboxylic acid ester, and copolymers of ethylene and α,β-unsaturated carboxylic acid. In addition, hydrogenated polymer copolymers such as an olefin-ethylene butylene-olefin block copolymer (CEBC) are also included. In addition, ionomer resins, which are ionic copolymers in which metal ions having a valence of 1 to 3 are added to a copolymer of an α-olefin containing ethylene and an α,β-unsaturated carboxylic acid are also included.

Examples of α-olefins include propylene, 1-butene, 1-pentene, 4-methyl-1-pentene, 1-hexene, 1-heptene, 1-octene, 1-nonene, and 1-decene.

In addition, examples of copolymers of ethylene, α-olefin and diene include an ethylene-propylene-diene copolymer and an ethylene-butene-diene copolymer. Examples of diene monomers contained therein include 5-vinyl-2-norbornene (VNB), 5-ethylidene-2-norbornene (ENB), dicyclopentadiene (DCPD), and 1,4-hexadiene (HD).

In addition, examples of copolymers of ethylene and carboxylic acid ester include an ethylene-ethyl acrylate copolymer (EEA), an ethylene-methyl acrylate copolymer (EMA), an ethylene-methyl methacrylate copolymer (EMMA), and an ethylene-vinyl acetate copolymer (EVA).

In this case, the ethylene-vinyl acetate copolymer also includes its saponified product.

Further, examples of α, β-unsaturated carboxylic acids copolymerizable with ethylene include acrylic acid, methacrylic acid, maleic acid, and fumaric acid and the like.

In addition, examples of diene copolymers include polybutadiene, polyisoprene, isobutene-isoprene copolymers, and their hydrogenated products and the like.

Among these, at least one of an ethylene-propylene copolymer (EPM), an ethylene-propylene-diene copolymer (EPDM), an ethylene-1-butene copolymer (EBR), an ethylene-vinyl acetate copolymer (EVA), and an olefin-ethylene butylene-olefin block copolymer (CEBC) is particularly preferable.

On the other hand, the styrene elastomer includes a copolymer having a styrene component or its hydrogenated product.

More specific examples thereof include, but are not limited to, at least one of a styrene-butadiene-styrene block polymer (SBS), a styrene-ethylene butylene-styrene block polymer (SEBS), styrene butadiene rubber (SBR), hydrogenated styrene butadiene rubber (HSBR), styrene-isoprene rubber (SIR), a styrene-isoprene-styrene block polymer (SIS), and a styrene-ethylene propylene-styrene block polymer (SEPS).

The styrene elastomer is particularly preferably at least one of styrene butadiene rubber (SBR) and a styrene-ethylene butylene-styrene block polymer (SEBS).

### (2) Viscosity

In addition, the component (B) is preferably any resin having a Mooney viscosity ML(1+4) at 100°C of 40 to 110, a Mooney viscosity ML(1+4) at 125°C of 20 to 80, or a melt flow rate (190°C, 2.16 kg) value within a range of below 3 g/10 min.

More specifically, it is preferable to use a resin having any of the following configurations (i) to (iii).
Configuration (i): a Mooney viscosity ML(1+4) at 100°C is a value within a range of 40 to 110.
Configuration (ii): a range excluding the configuration (i), wherein the Mooney viscosity ML(1+4) at 125°C is a value within a range of 20 to 80.
Configuration (iii): a range excluding the configurations (i) and (ii), wherein the melt flow rate (190°C, 2.16 kg) is a value within a range of below 3 g/10 min.

### (3) Addition amount

In addition, in the present invention, with respect to 100 parts by weight of the component (A) which is a main resin, the amount of the component (B) added is a value within a range of 1 to 70 parts by weight.

The reason for this is that, when the amount of the component (B) added is below 1 part by weight, not only could an improvement in sliding properties such as load-bearing capacity, low friction, and abrasion resistance of the sliding member formed of sliding resin composition not be expected, but also a sufficient effect in preventing the generation of creaking noise may not be observed in some cases.

On the other hand, this is because, when the amount of the component (B) added exceeds 70 parts by weight, the surface smoothness of the molded product may be impaired, the appearance may deteriorate, and molding defects such as peeling may easily occur in some cases.

Therefore, the amount of the component (B) added with respect to 100 parts by weight of the component (A) is more preferably a value within a range of 3 to 20 parts by weight, and still more preferably a value within a range of 5 to 15 parts by weight.

### (4) Average value (φ1) of domains having a circle equivalent diameter of 10 µm or more derived from the component (B)

In addition, in the present invention, per unit area, when domains having a circle equivalent diameter of 10 µm or more derived from the component (B) are selected, the average value φ1 of the circle equivalent diameters of the selected domains is a value within a range of 10 to 30 µm.

Here, the circle equivalent diameter is a diameter when assuming a circle having an area equal to the area of a particle, and the average value of the circle equivalent diameters could be calculated as a value corresponding to the arithmetic mean particle size (the same applies hereinafter), which is the average particle size based on JIS Z 8819-2:2019.

More specifically, the circle equivalent diameter could usually be measured using an image analysis method according to JIS Z 8827-1:2018.

In addition, although the unit area is not particularly limited, as an example, an observation range of about 108,000 µm² (1,200 µm×900 µm) is preferable.

For example, it has been separately found that, even when observed in a range of about 40,000 µm² or a range of about 500,000 µm², there is almost no difference in the values of φ1 and φ2 to φ4 (described below), compared to when observed in a range of 108,000 µm².

The reason for using such a configuration and targeting predetermined domains having a circle equivalent diameter of 10 µm or more is to confirm that the domain structure is in a non-uniform state due to the presence of such relatively large domains.

That is, this is because, while the coefficient of friction becomes low accordingly, the value of the allowable surface pressure becomes high, and consequently, it is possible to effectively reduce the generation of abnormal noise.

In other words, this is because, when the average value (φ1) of the predetermined domains is below 10 µm, that is, when there are no domains having a circle equivalent diameter of 10 µm or more, even if non-uniform dispersion occurs, it may become difficult to effectively reduce the generation of abnormal noise in some cases.

On the other hand, this is because, when the average value (φ1) of the predetermined domains exceeds 30 µm, the surface smoothness of the molded product may be impaired, the appearance may deteriorate, and molding defects such as peeling may easily occur in some cases.

Therefore, the average value (φ1) of the predetermined domains is more preferably 20 µm or less, and still more preferably 15 µm or less.

Further, since the average value (φ1) of the predetermined domains is calculated based on domains having a circle equivalent diameter of 10 µm or more, it is preferably a value exceeding 10 µm.

In addition, it could be identified when the standard deviation (σ) of the circle equivalent diameters is 0.8 µm or more in all domains per unit area measured by an image analysis method.

Therefore, the standard deviation (σ) of the circle equivalent diameters of all domains is more preferably a value within a range of 1 to 10 µm, and still more preferably a value within a range of 1.5 to 5 µm.

Namely, within the range of the standard deviation centered on the average value of the particle size distribution of all domains, the positive side from the average value is defined as +σ, and the negative side is defined as -σ.

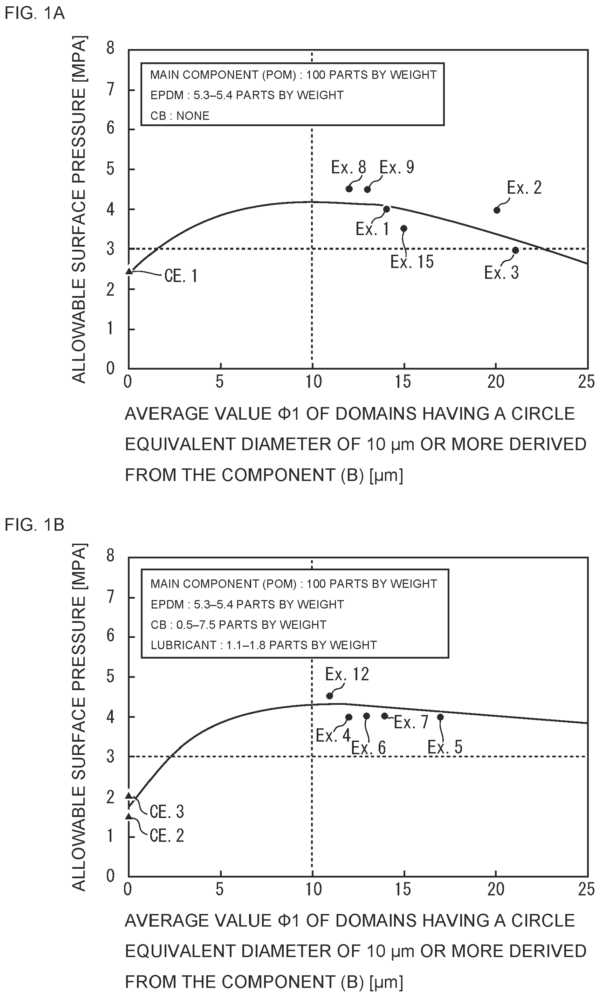

Here, when a sliding resin composition containing no carbon material is used, the relationship between the average value (φ1) of domains having a circle equivalent diameter of 10 µm or more derived from the component (B) and the allowable surface pressure will be described with reference to FIG. 1(a).

That is, in FIG. 1(a), the horizontal axis represents the value of the average value (φ1) of the predetermined domains in the sliding resin composition containing predetermined formulation components, and the vertical axis represents the value of the allowable surface pressure (MPa) measured by a method shown in Example 1 or the like.

As could be understood from the characteristic curve in FIG. 1(a), a high allowable surface pressure of 3 MPa or more could be obtained due to the presence of domains having a circle equivalent diameter of 10 µm or more.

However, when the average value (φ1) of the predetermined domains increases and reaches a predetermined range, for example, a range of 15 to 20 µm, the value of the allowable surface pressure gradually reaches saturation, or a tendency of slight decrease is observed when it exceeds 20 µm.

Therefore, it could be understood that, as an example, when the average value (φ1) of the predetermined domains is about 10 to 15 µm, a high allowable surface pressure of 3.5 MPa or more could be exhibited as the value of the allowable surface pressure.

Therefore, as shown in FIG. 7(a), when a sliding resin composition containing no carbon material is used, in relation to the average value (φ1) of domains having a circle equivalent diameter of 10 µm or more derived from the component (B), the coefficient of friction (-) decreases, and furthermore, the allowable surface pressure (MPa) increases and thus both effects could be improved.

That is, as could be understood from the characteristic curve in FIG. 7(a), when the average value (φ1) of the predetermined domains is a predetermined range, for example, about 10 to 20 µm, a tendency for the coefficient of friction to become a low value is observed.

In addition, the coefficient of friction of a molded product (sliding member) formed using the sliding resin composition of the present invention is preferably a value within a range of 0.1 to 0.65.

The reason for this is that, by setting the value in this manner, the sliding properties are improved, and the generation of unpleasant sliding friction noise (squeak noise) caused by stick-slip could be prevented more effectively.

Therefore, as an example, the coefficient of friction of the molded product is preferably 0.65 or less, more preferably 0.4 or less, still more preferably 0.22 or less, and particularly preferably 0.2 or less.

In addition, when a sliding resin composition containing a carbon material is used, the relationship between the average value (φ1) of domains having a circle equivalent diameter of 10 µm or more derived from the component (B) per unit area and the allowable surface pressure (MPa) will be described with reference to FIG. 1(b).

That is, in FIG. 1(b), the horizontal axis represents the value of the average value (φ1) of the predetermined domains in the sliding resin composition containing a carbon material, and the vertical axis represents the value of the allowable surface pressure (MPa).

As could be understood from the characteristic curve in FIG. 1(b), as the average value (φ1) of the domains increases, the value of the allowable surface pressure also increases, but a slight tendency for it to gradually reach saturation is observed.

Therefore, when the average value (φ1) of the predetermined domains is a value of 10 µm or more, a high allowable surface pressure of about 3 MPa or more could be obtained.

As an example, it could be understood that, when the average value (φ1) of the predetermined domains is about 10 to 20 µm, a high allowable surface pressure of 3.5 MPa or more could be exhibited as the value of the allowable surface pressure.

However, as shown in FIG. 7(b), even when a sliding resin composition containing a carbon material is used, it could be said that the relationship between the average value (φ1) of the predetermined domains and the coefficient of friction (-) has a tendency opposite to the relationship with the allowable surface pressure (MPa).

That is, as could be understood from the characteristic curve in FIG. 7(b), when the average value (φ1) of the predetermined domains is in a predetermined range (for example, 10 to 20 µm), a tendency for the coefficient of friction to become a low value equal to or lower than a predetermined value is observed.

### (5) Average value (φ2) of at least five domains, in descending order of size, derived from the component (B)

In addition, per unit area, the average value φ2 of at least five domains, in descending order of size, derived from the component (B) is preferably a value within a range of 10 to 130 µm.

That is, the reason for targeting the maximum particle size (φ2) of the predetermined domains is to confirm and evaluate that a predetermined non-uniform state is brought about due to the presence of relatively large domains.

Further, when the maximum particle size (φ2) of the predetermined domains is controlled, the coefficient of friction becomes low accordingly, but the value of the allowable surface pressure becomes high, and consequently, and it is possible to effectively reduce the generation of abnormal noise.

In other words, this is because, when the maximum particle size (φ2) of the predetermined domains is below 10 µm, the domains are uniformly dispersed in the form of fine particles, and it may become difficult to effectively reduce the generation of abnormal noise in some cases.

On the other hand, this is because, when the maximum particle size (φ2) of the predetermined domains exceeds 130 µm, the surface smoothness of the molded product may be impaired, the appearance may deteriorate, and molding defects such as peeling may easily occur in some cases.

Therefore, the maximum particle size (φ2) of the predetermined domains is preferably 80 µm or less and more preferably 30 µm or less.

In addition, the maximum particle size (φ2) of the predetermined domains is preferably a value exceeding 10 µm in relation to the average value (φ1) of the predetermined domains.

Hereinafter, the maximum particle size (φ2) of the predetermined domains will be described assuming that five domains, in descending order of size, derived from the component (B) are selected.

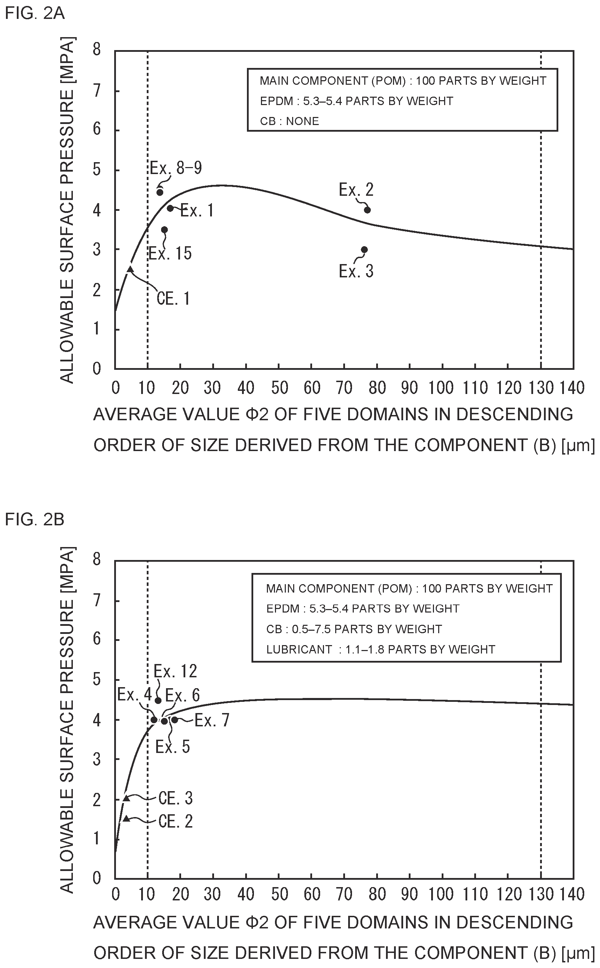

Here, when a sliding resin composition containing no carbon material is used, the relationship between the average value (φ2) of five domains, in descending order of size, derived from the component (B) and the allowable surface pressure (MPa) will be described with reference to FIG. 2(a).

That is, in FIG. 2(a), the horizontal axis represents the value of the maximum particle size (φ2) of the predetermined domains in the sliding resin composition containing predetermined formulation components, and the vertical axis represents the value of the allowable surface pressure (MPa) measured by a method shown in Example 1 or the like.

As could be understood from the characteristic curve in FIG. 2(a), as the maximum particle size (φ2) of the predetermined domains increases, the value of the allowable surface pressure also increases, but it gradually reaches saturation, and furthermore, when the maximum particle size (φ2) of the predetermined domains is a predetermined value or more, conversely, a tendency for the value of the allowable surface pressure to decrease is observed.

Therefore, when the maximum particle size (φ2) of the predetermined domains is 10 µm or more, the allowable surface pressure could be a value of about 3 MPa or more, and when the maximum particle size (φ2) of the predetermined domains is a value of 20 µm or more, the allowable surface pressure could be a value of 3.5 MPa or more.

On the other hand, when the maximum particle size (φ2) of the predetermined domains is a value exceeding 130 µm, the surface condition of the molded product may deteriorate.

Therefore, it could be said that, in order to obtain a high value of the allowable surface pressure, it is preferable to adjust the maximum particle size (φ2) of the predetermined domains to at least a value within a range of 10 to 130 µm.

However, as shown in FIG. 8(a), it could be said that, when a sliding resin composition containing no carbon material is used, the relationship between the average value (φ2) of at least five domains, in descending order of size, derived from the component (B), and the coefficient of friction (-) has a tendency opposite to the relationship with the allowable surface pressure (MPa).

That is, as could be understood from the characteristic curve in FIG. 8(a), when the maximum particle size (φ2) of the predetermined domains is in a predetermined range (for example, a value within a range of 10 to 130 µm), a tendency for the coefficient of friction to become a low value equal to or lower than a predetermined value is observed.

In addition, when a sliding resin composition containing a carbon material is used, the relationship between the average value (φ2) of five domains, in descending order of size, derived from the component (B) and the allowable surface pressure (MPa) will be described with reference to FIG. 2(b).

That is, in FIG. 2(b), the horizontal axis represents the value of the maximum particle size (φ2) of the predetermined domains in the sliding resin composition containing a carbon material, and the vertical axis represents the value of the allowable surface pressure (MPa).

As could be understood from the characteristic curve in FIG. 2(b), as the maximum particle size (φ2) of the predetermined domains increases, the value of the allowable surface pressure increases, but a tendency for it to gradually reach saturation is observed.

Therefore, when the maximum particle size (φ2) of the predetermined domains is a value of 10 µm or more, the allowable surface pressure could be a value of about 3 MPa or more.

On the other hand, when the maximum particle size (φ2) of the predetermined domains is a value exceeding 130 µm, the surface smoothness of the molded product is impaired, the appearance deteriorates, and molding defects such as peeling may easily occur in some cases.

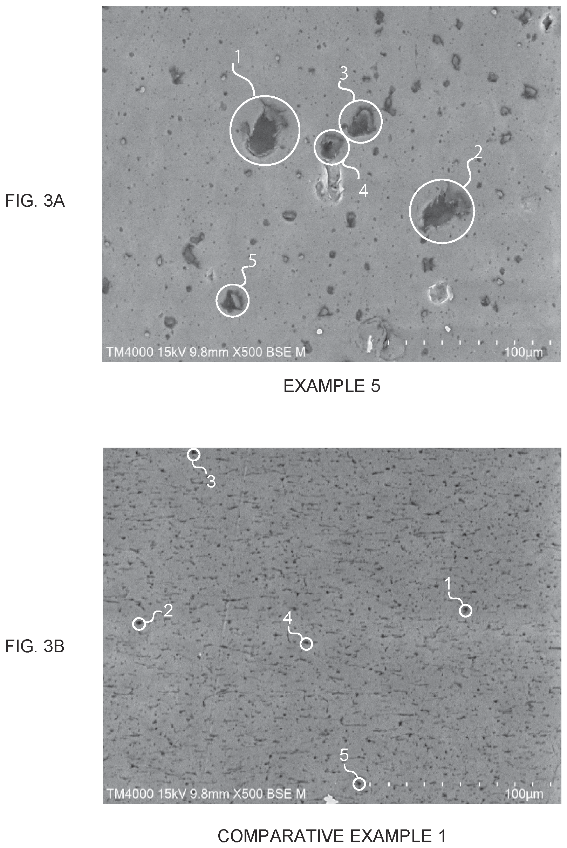

Further, as shown in FIG. 3(b), it could be understood that, when the domains derived from the component (B) are dispersed in the form of fine particles, five domains, in descending order of size, circled with predetermined O marks, have almost the same size as the other domains, that is, they are in a uniformly dispersed state.

### (6) Area ratio (φ3) of domains having a circle equivalent diameter of 10 µm or more derived from the component (B)

In addition, per unit area, an area ratio (φ3) of the domains having a circle equivalent diameter of 10 µm or more derived from the component (B) is preferably a value within a range of 0.5 to 20%.

That is, the area ratio (φ3) of the predetermined domains is controlled to confirm and evaluate that relatively large domains are non-uniformly dispersed to an appropriate degree.

Therefore, the coefficient of friction becomes low accordingly, but the value of the allowable surface pressure becomes high, and consequently, it is possible to effectively reduce the generation of abnormal noise.

In other words, this is because, when the area ratio (φ3) of the predetermined domains is below 0.5%, uniform dispersion practically occurs, and it may become difficult to effectively reduce the generation of abnormal noise in some cases.

On the other hand, this is because, when the area ratio (φ3) of the predetermined domains exceeds 20%, the surface smoothness of the molded product may be impaired, the appearance may deteriorate, and molding defects such as peeling may easily occur in some cases.

Therefore, the area ratio (φ3) of the predetermined domains is preferably a value within a range of 1 to 10% and more preferably a value within a range of 1.5 to 5%.

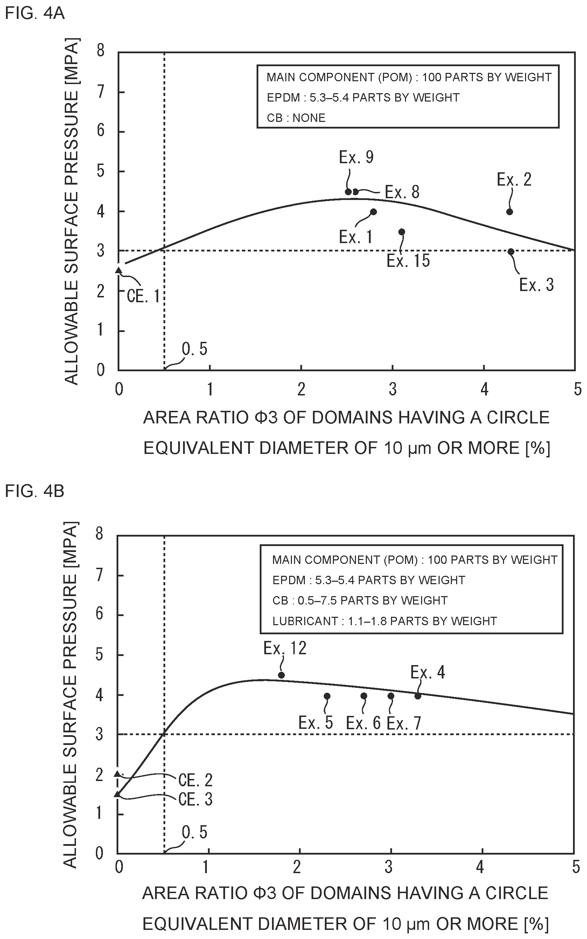

Here, when a sliding resin composition containing no carbon material is used, the relationship between the area ratio (φ3) of the predetermined domains and the allowable surface pressure (MPa) will be described with reference to FIG. 4(a).

In FIG. 4(a), the horizontal axis represents the value of the area ratio (φ3) of the predetermined domains in the sliding resin composition containing predetermined formulation components, and the vertical axis represents the value of the allowable surface pressure (MPa) measured by a method shown in Example 1 or the like.

In addition, as could be understood from the characteristic curve in FIG. 4(a), as the area ratio (φ3) of the predetermined domains increases, the value of the allowable surface pressure (MPa) also increases, but a tendency for it to gradually reach saturation is observed.

When the area ratio (φ3) of the predetermined domains is a predetermined value or more, conversely, a tendency for the value of the allowable surface pressure to decrease is observed.

Therefore, when the area ratio (φ3) of the predetermined domains is a value of 0.5 to 5%, the allowable surface pressure easily becomes a value of about 3 MPa or more.

However, as shown in FIG. 9(a), it could be said that, when a sliding resin composition containing no carbon material is used, the relationship between the area ratio (φ3) of the predetermined domains and the coefficient of friction (-) has a tendency opposite to the relationship with the allowable surface pressure (MPa).

That is, as could be understood from the characteristic curve in FIG. 9(a), when the area ratio (φ3) of the predetermined domains is in a predetermined range (for example, 1.5 to 5%), a tendency for the coefficient of friction to become a low value equal to or lower than a predetermined value is observed.

### (7) Relationship between the average value (φ1) of domains having a circle equivalent diameter of 10 µm or more derived from the component (B) and the area ratio (φ3) of domains having a circle equivalent diameter of 10 µm or more derived from the component (B)

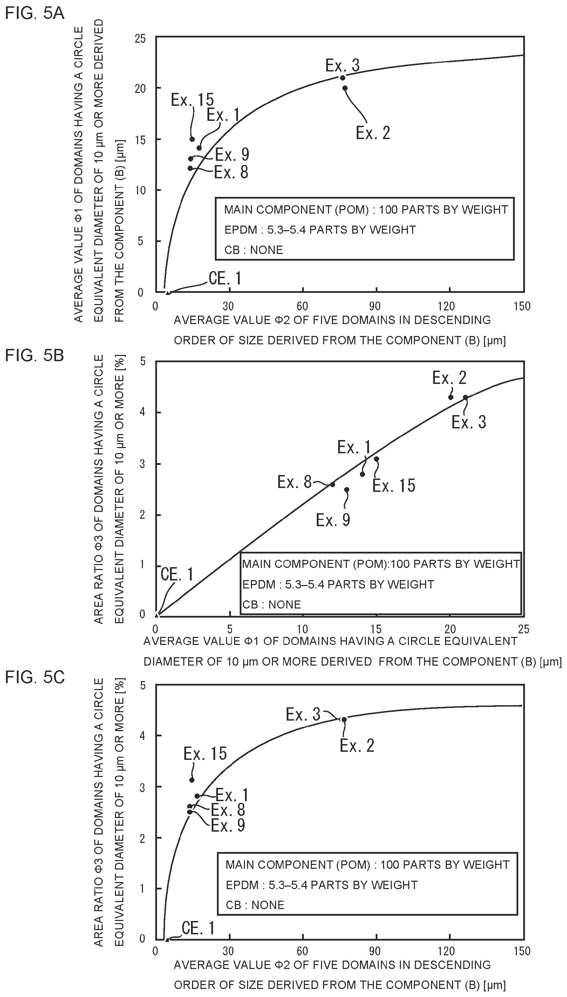

Next, the relationship between the average value (φ1) of domains having a circle equivalent diameter of 10 µm or more derived from the component (B) and the area ratio (φ3) of domains having a circle equivalent diameter of 10 µm or more derived from the component (B) in a predetermined sliding agent composition (containing no carbon material) will be described with reference to FIG. 5(b).

The horizontal axis represents the average value (φ1) of the predetermined domains, and the vertical axis represents the area ratio (φ3) of the predetermined domains.

As shown in the characteristic curve in FIG. 5(b), as the average value (φ1) of the predetermined domains increases, a tendency for the area ratio (φ3) of the predetermined domains to increase is observed.

Therefore, it could be said that, when the level of the average value (φ1) of the predetermined domains is controlled, the area ratio (φ3) of the predetermined domains could also be controlled to be within a desired range, and consequently, as shown in FIG. 4(a) and FIG. 4(b), the allowable surface pressure could also be controlled to be a value within a desired range.

Furter, FIG. 6(b) shows the relationship between the average value (φ1) of the predetermined domains and the area ratio (φ3) of the predetermined domains in a predetermined sliding agent composition (containing a carbon material), which shows substantially the same tendency as the characteristic curve in FIG. 5(b).

### (8)-1 Relationship between the average value (φ2) of five domains, in descending order of size, derived from the component (B) and the average value (φ1) of domains having a circle equivalent diameter of 10 µm or more derived from the component (B)

Next, the relationship between the maximum particle size (φ2) of the predetermined domains and the average value (φ1) of the predetermined domains in a predetermined sliding agent composition (containing no carbon material) will be described with reference to FIG. 5(a).

The horizontal axis represents the maximum particle size (φ2) of the predetermined domains, and the vertical axis represents the average value (φ1) of the predetermined domains.

As shown in the characteristic curve in FIG. 5(a), as the maximum particle size (φ2) of the predetermined domains increases, the average value (φ1) of the predetermined domains also rapidly increases, and a tendency for it to rapidly reach saturation is then observed.

Therefore, it could be said that, when the level of the maximum particle size (φ2) of the predetermined domains is controlled, the average value (φ1) of the predetermined domains could also be controlled to be within a desired range, and consequently, as shown in FIG. 1(a) and FIG. 1(b), the allowable surface pressure could also be controlled to be within a desired range.

Further, FIG. 6(a) shows the relationship between the average value (φ1) of the predetermined domains and the area ratio (φ3) of the predetermined domains in a predetermined sliding agent composition (containing a carbon material), which shows substantially the same tendency as the characteristic curve in FIG. 5(a).

### (8)-2 Relationship between the average value (φ2) of at least five domains, in descending order of size, derived from the component (B) and the area ratio (φ3) of domains having a circle equivalent diameter of 10 µm or more derived from the component (B)

Next, the relationship between the maximum particle size (φ2) of the predetermined domains and the area ratio (φ3) of the predetermined domains in a predetermined sliding agent composition (containing no carbon material) will be described with reference to FIG. 5(c).

The horizontal axis represents the maximum particle size (φ2) of predetermined domains, and the vertical axis represents the area ratio (φ3) of predetermined domains.

As shown in the characteristic curve in FIG. 5(c), as the maximum particle size (φ2) of the predetermined domains increases, the area ratio (φ3) of the predetermined domains also rapidly increases, and a tendency for it to gradually reach saturation is then observed.

Therefore, it could be said that, when the level of the maximum particle size (φ2) of the predetermined domains is controlled, the area ratio (φ3) of the predetermined domains could also be controlled to be within a desired range, and consequently, as shown in FIG. 4(a) and FIG. 4(b), the allowable surface pressure could also be controlled to be a value within a desired range.

Further, FIG. 6(c) shows the relationship between the maximum particle size (φ2) of the predetermined domains and the area ratio (φ3) of the predetermined domains in a predetermined sliding agent composition (containing a carbon material), which shows substantially the same tendency as the characteristic curve in FIG. 5(c).

### (9) Area ratio (φ4) of domains having a circle equivalent diameter of 10 µm or more derived from the component (B) relative to the total particle area in a unit area

In addition, relative to the total particle area in a unit area, the area ratio (φ4) of domains having a circle equivalent diameter of 10 µm or more derived from the component (B) is preferably a value within a range of 5 to 95%.

That is, the area ratio (φ4) of predetermined domains is controlled to confirm and evaluate that both domains having a circle equivalent diameter of 10 µm or more and domains having a circle equivalent diameter of below 10 µm are present at a certain ratio, that is, they are in a non-uniform state.

Therefore, the coefficient of friction becomes low accordingly, but the value of the allowable surface pressure becomes high, and consequently, it is possible to effectively reduce the generation of abnormal noise.

In other words, this is because, when the area ratio (φ4) of predetermined domains is below 5%, uniform dispersion practically occurs, and it may become difficult to effectively reduce the generation of abnormal noise in some cases.

On the other hand, this is because, when the area ratio (φ4) of predetermined domains exceeds 95%, the surface smoothness of the molded product may be impaired, the appearance may deteriorate, and molding defects such as peeling may easily occur in some cases.

Therefore, the area ratio (φ4) of predetermined domains is more preferably a value within a range of 10 to 80%, and still more preferably a value within a range of 20 to 60%.

Namely, it could be understood that the particles with a size corresponding to about 1% or less of the total particle area, which could not be recognized by an image analysis method, have almost no influence on calculation of the values φ1 to φ4 and are negligible.

### 3. Lubricant (C)

### (1) Kind

In the sliding resin composition, it is preferable to add, as a component (C), a lubricant that is a liquid at room temperature or becomes a liquid during heating for molding.

Here, examples of lubricant agents that are liquids at room temperature include at least one of paraffinic and naphthenic mineral oils such as spindle oil, refrigerator oil, dynamo oil, turbine oil, machine oil, cylinder oil and gear oil, animal oils such as whale oil, vegetable oils such as castor oil and jojoba oil, and synthetic oils such as esters, polyglycols, polyphenyl ethers, silicones and halocarbons.

In addition, examples of lubricant agents that become liquids during heating for molding include waxy substances such as natural waxes including montan wax and carnauba wax, hydrocarbon waxes, higher fatty acids, and waxes obtained by deriving higher fatty acids.

That is, examples of hydrocarbon waxes include at least one of paraffin waxes having approximately 24 or more carbon atoms, olefin waxes having approximately 26 or more carbon atoms, alkylbenzenes having approximately 28 or more carbon atoms, and microcrystalline waxes.

In addition, examples of higher fatty acids include at least one of higher saturated fatty acids having approximately 12 or more carbon atoms such as lauric acid, myristic acid, palmitic acid, stearic acid, arachidic acid, behenic acid, cerotic acid and montanic acid, and unsaturated fatty acids having 18 or more carbon atoms such as oleic acid, linoleic acid, linolenic acid, elaidic acid, octadecenoic acid, arachidonic acid, cadreic acid, erucic acid, and parinaric acid.

In addition, examples of waxes obtained by deriving higher fatty acids include higher fatty acid esters, higher fatty acid amides and higher fatty acid salts.

### (2) Addition amount

In addition, the amount of the lubricant added as the component (C) with respect to 100 parts by weight of the component (A) is preferably a value within a range of 0.1 to 10 parts by weight.

The reason for this is that, when the amount of the component (C) added is below 0.1 parts by weight, the effect of improving sliding properties may be insufficient.

On the other hand, this is because, when the amount of the component (C) added exceeds 10 parts by weight, deterioration in mechanical properties of the molded sliding member, deterioration in surface appearance, and deterioration in molding processability may occur.

Therefore, the amount of the lubricant agent added as the component (C) with respect to 100 parts by weight of the component (A) is more preferably a value within a range of 0.3 to 5 parts by weight, and still more preferably a value within a range of 0.5 to 3 parts by weight.

### 4. Polyolefin resin (D)

### (1) Kind

In the sliding resin composition, it is preferable to add, as the component (D), a known polyolefin resin excluding the olefin elastomer corresponding to the component (B).

This is because, when such a polyolefin resin is added, it may be possible to adjust the sliding properties of the sliding resin member and further reduce the generation of sliding noise.

Therefore, examples of such polyolefin resins (D) include at least one of polyethylenes such as low-density polyethylene (LDPE), linear low-density polyethylene (LLDPE), high-density polyethylene (HDPE), and ultra-high molecular weight polyethylene (UHMWPE), polypropylene (PP), and polybutylene (PB-1).

In addition, the polyolefin resin is preferably a modified polyolefin resin with a reactive functional group added. Examples of reactive functional groups include a carboxyl group, an acid anhydride group, an epoxy group, an oxazoline group, an amino group, and an isocyanate group. It is preferable to use a maleic anhydride-modified polyethylene because a higher allowable surface pressure could be secured through a synergistic effect with the component (B).

In addition, examples of polyolefin resins (D) include a copolymer containing an ethylene-derived structural unit and a structural unit having a reactive functional group. Examples of structural units having a reactive functional group include glycidyl methacrylate (GMA) having an epoxy group. Specific examples thereof include an ethylene-glycidyl methacrylate copolymer, an ethylene-vinyl acetate-glycidyl methacrylate copolymer, and an ethylene-methyl acrylate-glycidyl methacrylate copolymer.

### (2) Density and melt flow rate

In addition, the density of the polyolefin resin is not particularly limited and usually, is preferably a value within a range of 860 to 930 kg/m³, more preferably a value within a range of 900 to 930 kg/m³, and still more preferably a value within a range of 910 to 930 kg/m³.

In addition, the melt flow rate (MFR) of the polyolefin resin is not particularly limited, and usually, is preferably a value within a range of 2 to 100 g/10 min, and more preferably a value within a range of 25 to 50 g/10 min.

### (3) Addition amount

In addition, the amount of the polyolefin resin (D) added with respect to 100 parts by weight of the component (A) is preferably a value within a range of 0.01 to 10 parts by weight.

The reason for this is that, when the amount of the component (D) added is below 0.01 parts by weight, the effect of improving sliding properties and the like may be insufficient.

On the other hand, this is because, when the amount of the component (D) added exceeds 10 parts by weight, deterioration in mechanical properties of the molded sliding member, deterioration in surface appearance and the like may occur.

Therefore, the amount of the polyolefin resin (D) added with respect to 100 parts by weight of the component (A) is more preferably a value within a range of 0.1 to 5 parts by weight and still more preferably a value within a range of 0.5 to 3 parts by weight.

### (4) Commercially available product

Specific examples of typical commercially available polyolefin resins include ethylene-glycidyl methacrylate copolymers (Bondfast E, commercially available from Sumitomo Chemical Co., Ltd.), maleic anhydride-modified low-density polyethylenes (Admer NR106, commercially available from Mitsui Chemicals Inc.), and maleic anhydride modified ultra-high molecular weight polyethylenes (LUBMER LY1040, commercially available from Mitsui Chemicals Inc.).

### 5. Carbon material (E)

### (1) Kind

It is preferable to add, as a component (E), a predetermined amount of a carbon material to the component (A) which is a main resin.

The type of the carbon material component (E) is not particularly limited, and it is preferably at least one of natural or artificial graphite (graphite), carbon black such as furnace black, acetylene black, thermal black, and channel black, and carbon materials (carbon fibers) such as carbon nanofibers and carbon nanotubes.

This is because, when at least one of these carbon materials is added, an excellent coloring effect could be exhibited even if a relatively small amount is added.

In addition, this is because, when a carbon material is used, it could function as a carrier for absorbing and retaining a lubricant agent, and it is possible to further improve the durability, slipperiness, heat resistance and the like of the sliding member.

In addition, the primary particle size of the carbon material component (E) is preferably about below 200 nm.

The reason for this is that, when a carbon material having such a primary particle size is added, the function as a carrier for absorbing and retaining a lubricant agent to be described below is more easily exhibited, and consequently, it may become easier to further reduce the generation of creaking noise and the like.

Therefore, the primary particle size of the component (E) is more preferably 5 nm to 150 nm, and still more preferably 10 nm to 100 nm.

In addition, DBP oil absorption of the carbon material component (E) is preferably 100 ml/100 g or more.

The reason for this is that, when a carbon material having such a DBP oil absorption is added, it becomes possible to absorb and retain a larger amount of a lubricant agent, and consequently, it may become easier to further reduce the generation of creaking noise and the like.

Therefore, DBP oil absorption of the component (E) is more preferably 200 ml/100 g or more and still more preferably 300 ml/100 g or more.

More specifically, the carbon material is preferably one that has a hollow structure to form a porous structure, and more preferably one that has an appropriate chain structure.

Examples of carbon materials having such a structure include "Carbon ECP (product name)" and "Ketjenblack EC-600JD (product name)" (commercially available from Lion Specialty Chemicals Co., Ltd.).

### (2) Addition amount

In addition, although the amount of the carbon material added varies depending on the application of the sliding member, it is usually preferably a value of 0.01 to 10 parts by weight or less with respect to 100 parts by weight of the component (A).

The reason for this is that, when the amount of the carbon material added is a predetermined range value, it may be possible to further improve the durability, slipperiness, heat resistance and the like of the sliding member.

Therefore, although the amount of the carbon material added varies depending on the application of the sliding member, it is usually, with respect to 100 parts by weight of the component (A), more preferably a value of 0.5 parts by weight or less, still more preferably a value within a range of 0.05 to 0.4 parts by weight, and particularly preferably a value within a range of 0.08 to 0.3 parts by weight.

### 6. Additive 1

In addition, it is preferable to add, as other additives, solid lubricants such as molybdenum disulfide and polytetrafluoroethylene, fibrous materials such as glass fibers, carbon fibers, aramid fibers, potassium titanate fibers and their whiskers, and inorganic fillers such as glass powder, talc, clay, calcium carbonate and zinc oxide.

That is, it is also preferable to add such solid lubricants, fibrous materials, inorganic fillers and the like to further improve the abrasion resistance, durability, heat resistance and the like of the sliding member.

Therefore, although the amount of the solid lubricant or the like added varies depending on the application of the sliding member, it is usually, with respect to 100 parts by weight of the component (A), preferably a value within a range of 0.01 to 10 parts by weight, more preferably a value within a range of 0.1 to 5 parts by weight, and still more preferably a value within a range of 1 to 3 parts by weight.

### 7. Additive 2

In addition, it is also preferable to additionally add, as various other stabilizers, at least one of a UV absorber, an antioxidant, a thermal stabilizer and the like to further improve the light stability, durability, heat resistance and the like of the sliding member.

Therefore, although the amount of the stabilizer added varies depending on the application of the sliding member, it is usually, with respect to 100 parts by weight of the component (A), preferably a value within a range of 0.001 to 1 part by weight, more preferably a value within a range of 0.005 to 0.5 parts by weight, and still more preferably a value within a range of 0.008 to 0.2 parts by weight.

Furthermore, depending on the application of the sliding resin composition, it is also preferable to add at least one functional additive such as various colorants (excluding carbon materials), release agents, antistatic agents, and surfactants.

The amount of the functional additive added varies depending on its kind, the application of the sliding member and the like, but it is usually, with respect to 100 parts by weight of the component (A), preferably a value within a range of 0.001 to 10 parts by weight, more preferably a value within a range of 0.01 to 5 parts by weight, and still more preferably a value within a range of 0.1 to 1 part by weight.

### 8. Production method

In addition, the sliding resin composition could be easily prepared by known methods generally used as conventional resin composition preparation methods.

For example, at least the components (A) and (B) are used as essential components, predetermined amounts of the components (C) to (E) as optional components, as well as other additives, are measured, and these components are mixed using a mixing machine such as a Henschel mixer, a super mixer, a ball mill and a tumbler mixer until they become uniform, and thereby a mixture is prepared first.

Next, a preferable method includes one in which the obtained mixture is usually put into a single-screw or twin-screw extruding machine, which is an extruder, according to a known production method, and melt-kneaded at a predetermined temperature and a predetermined pressure, and molded into a string-like molded product, which is then cut to produce pellets.

That is, the sliding resin composition has favorable molding processability such as feedability into a screw of a molding machine, and the sliding member formed by molding the sliding resin composition could be easily produced by a conventional injection molding machine or extrusion molding machine.

Further, the obtained sliding member exhibits a significantly improved load-bearing capacity without impairing its mechanical properties, prevents the generation of abnormal noise such as creaking noise during sliding friction with a mating material, and could significantly improve sliding properties including low friction and abrasion resistance.

### [Second embodiment]

A second embodiment provides a sliding resin member including, as a constituent component, a sliding resin composition containing the following components (A) and (B) and in which at least domains having a circle equivalent diameter of 10 µm or more derived from the component (B) are non-uniformly dispersed in the component (A).

Here, in the sliding resin member, when domains having a circle equivalent diameter of 10 µm or more derived from the component (B) are selected per unit area of an arbitrary cross section, an average value (φ1) of the circle equivalent diameters of the selected domains is a value within a range of 10 to 30 µm.
(A) at least one main resin selected from the group consisting of a polyacetal resin, a polyamide resin, a polybutylene terephthalate resin and a polycarbonate resin: 100 parts by weight
(B) an olefin elastomer and a styrene elastomer, or either one of the elastomers: 1 to 70 parts by weight

Hereinafter, the sliding member according to the second embodiment will be described in detail with reference to the drawings as appropriate, focusing on differences from the description of the sliding resin composition according to the first embodiment.

### 1. Sliding resin composition

Basically, the sliding resin composition according to the second embodiment couls be formed in the same manner as the sliding resin composition according to the first embodiment. Therefore, repeated descriptions here are omitted.

### 2. Sliding member

### (1) Kind

The form of the sliding member obtained from the sliding resin composition using an injection molding method or the like is not particularly limited, and various modifications could be made.

For example, the sliding member is typically a plain bearing, and is preferably a cylindrical bearing that receives a load on its inner peripheral surface and has the same thickness as the end surface or a flanged bearing that receives a load on its inner peripheral surface and end surface.

Here, at least one or a plurality of such plain bearings may be provided.

### (2) Sliding properties

Various sliding properties of the sliding member formed of the sliding resin composition could be determined by evaluating abnormal noise generation, a coefficient of friction, an allowable surface pressure and the like, according to evaluations 4 to 6, as shown in Example 1.

### 3. Production method

The method of producing a sliding member obtained from a sliding resin composition is not particularly limited, and typically, it is preferable to use an injection molding method.

### (Injection molding method)

That is, according to the injection molding method, as an example, a predetermined sliding member could be produced by the following steps 1) to 5).
1) Prepare an injection molding device.
2) Put a sliding resin composition, which is a molding material pellet, into a hopper of the injection molding device or the like.
3) Melt the sliding resin composition using a heating device of the injection molding device.
4) Inject the molten sliding resin composition into a predetermined mold using the injection molding device.
5) After cooling, remove the predetermined sliding member.

### [Examples]

### (Preparation of formulation component)

In examples and comparative examples, the following raw materials were prepared and used as formulation components.

Component (A): POM, etc.
(A1) As the component (A), a polyacetal resin (copolymer) ["Duracon M90-44 (product name)," commercially available from Polyplastics Co., Ltd.] was prepared.
(A2) A polybutylene terephthalate resin ["Toraycon 1401X06 (product name)," commercially available from Toray Industries, Inc.] was prepared.
(A3) A polyamide resin (nylon 66) ["LEONA 1402S (product name)," commercially available from Asahi Kasei Corporation] was prepared.
(A4) A polycarbonate resin ["Iupilon S-2000 (product name)," commercially available from Mitsubishi Engineering-Plastics Corporation] was prepared.

Component (B): olefin elastomer and styrene elastomer
(B1) EPDM of "MITSUI EPT 3092PM (product name)," commercially available from Mitsui Chemicals Inc. with an ethylene content of 65 wt%, 5-ethylidene-2-norbornene (ENB) as a diene component (a diene content of 4.6 wt%), and a Mooney viscosity ML(1+4) at 125°C of 61 was prepared.
(B2) EPDM of "EP57C (product name)," commercially available from ENEOS Materials Corporation with an ethylene content of 67 wt%, 5-ethylidene-2-norbornene (ENB) as a diene component (a diene content of 4.5 wt%), and a Mooney viscosity ML(1+4) at 125°C of 58 was prepared.
(B3) An olefin-ethylene butylene-olefin block polymer of CEBC "DYNARON 6201B (product name)," commercially available from ENEOS Materials Corporation with a melt flow rate of below 0.1 g/10 min at a temperature of 230°C and a load of 2.16 kg was prepared.
(B4) EPM of "MITSUI EPT 0045 (product name)," commercially available from Mitsui Chemicals Inc. with an ethylene content of 51 wt% and a Mooney viscosity ML(1+4) at 100°C of 40 was prepared.
(B5) EPDM of "MITSUI EPT 3110M (product name)," commercially available from Mitsui Chemicals Inc. with an ethylene content of 56 wt%, 5-ethylidene-2-norbornene (ENB) as a diene component (a diene content of 5.0 wt%), and a Mooney viscosity ML(1+4) at 125°C of 78 was prepared.
(B6) EPDM of "MITSUI EPT-X-3012P (product name)," commercially available from Mitsui Chemicals Inc. with an ethylene content of 72 wt%, 5-ethylidene-2-norbornene (ENB) as a diene component (a diene content of 3.6 wt%), and a Mooney viscosity ML(1+4) at 100°C of 15 was prepared.
(B7) EPDM of "MITSUI EPT 3070 (product name)," commercially available from Mitsui Chemicals Inc. with an ethylene content of 58 wt%, 5-ethylidene-2-norbornene (ENB) as a diene component (a diene content of 4.7 wt%), and a Mooney viscosity ML(1+4) at 125°C of 47 was prepared.
(B8) Styrene-butadiene rubber (SBR) of "TUFDENE 2110R (product name)," commercially available from Asahi Kasei Corporation with a styrene content of 25 wt% and a Mooney viscosity ML(1+4) at 100°C of 78 was prepared.
(B9) A styrene-ethylene-butylene-styrene copolymer (SEBS) of "DYNARON 9901P (product name)," commercially available from ENEOS Materials Corporation with a styrene content of 35 wt% and a melt flow rate of 3.3 g/10 min at a temperature of 230°C and a load of 2.16 kg was prepared.
(B10) An ethylene-vinyl acetate copolymer (EVA) of "EVAFLEX EV45LX (product name)," commercially available from Mitsui-Dow Polychemicals Co., Ltd. with a vinyl acetate content of 46 wt% and a melt flow rate of 2.5 g/10 min at a temperature of 190°C and a load of 2.16 kg was prepared.
(B11) An ethylene-1-butene copolymer (EBR) of "Excellen VL100," commercially available from Sumitomo Chemical Co., Ltd. with a melt flow rate of 0.8 g/10 min at a temperature of 190°C and a load of 2.16 kg was prepared.
(B12) An ethylene-vinyl acetate copolymer (EVA) of "EVAFLEX EV45X (product name)," commercially available from Mitsui-Dow Polychemicals Co., Ltd. with a vinyl acetate content of 46 wt% and a melt flow rate of 100 g/10 min at a temperature of 190°C and a load of 2.16 kg was prepared.
(B13) An ethylene-ethyl acrylate copolymer (EEA) of "NUC6675," commercially available from ENEOS NUC Corporation with an ethyl acrylate content of 25 wt% and a melt flow rate of 20 g/10 min at a temperature of 190°C and a load of 2.16 kg was prepared.

Component (C): lubricant
(C1) Paraffin oil (Moresco White P-350P, commercially available from MORESCO Corporation) was prepared.
(C2) Hydrocarbon synthetic oil (ethylene-α-olefin oligomer) (LUCANT, commercially available from Mitsui Chemicals Inc.) was prepared.

Component (D): polyolefin resin
(D1) A maleic anhydride-modified low-density polyethylene (Admer NR106, commercially available from Mitsui Chemicals Inc.) was prepared.
(D2) An ethylene-glycidyl methacrylate copolymer (Bondfast E, commercially available from Sumitomo Chemical Co., Ltd.) was prepared.

Component (E): carbon material
(E1) Carbon black (Ketjenblack EC600JD, a primary particle size: 34 nm, commercially available from Lion Specialty Chemicals Co., Ltd.) was prepared.
(E2) An amorphous graphite powder (average particle size: 5 µm, P#1, commercially available from Nippon Graphite Industries, Co., Ltd.) was prepared.

### [Example 1]

### 1. Preparation of sliding resin composition and sliding member (molded product)

Inside a high-speed mixer, 5.3 parts by weight of the olefin elastomer (B1) as the component (B) and 2.2 parts by weight of the polyolefin resin (D1) as the component (D) were introduced with respect to 100 parts by weight of the polyacetal resin (A1) as the component (A), and the mixture was stirred in a high-speed mixer to obtain a sliding resin composition.

The obtained sliding resin composition was supplied to a twin-screw extruding machine (Process 11, a screw diameter of 11 mm, commercially available from Thermo Fisher Scientific Inc.) and melt-kneaded under conditions (200°C, 300 rpm) to form a string-like molded product, and this product was then cut with a pelletizer to prepare a pellet material.

Next, this pellet material was injection-molded using a screw-type injection molding machine (SE50-DUZ, a screw diameter of 25 mm, commercially available from Sumitomo Heavy Industries) to obtain a plate-like sliding member with a size of 30 mm square and a thickness of 3 mm.

### 2. Evaluation of sliding resin composition and sliding member (molded product) formed using the same

### (1) Evaluation 1 (average value of domains having a circle equivalent diameter of 10 µm or more: φ1)

A plate-like sliding member as a test piece was cut to an arbitrary size, embedded in an epoxy resin and polished to prepare an observation sample.

Next, observation images at a magnification of 100 to 500x were acquired using a scanning electron microscope (SEM).

Specifically, the observation images shown in FIGS. 12(a) and 12(b) (Example 12 and Example 15) were obtained.

Next, all domains having a circle equivalent diameter of 10 µm or more derived from the component (B) (dispersion state) per unit area were selected using an image analysis method (image analysis software ["WinROOF2018," commercially available from Mitani Corporation], the same applies hereinafter), and the average value of the predetermined domains was calculated, and evaluated according to the following criteria.
⊚(Very good): the average value (φ1) of the predetermined domains was a value within a range of 10 to 15 µm.
O(Good): the average value (φ1) of the predetermined domains was a value within a range of above than 15 µm to 20 µm.
△(Fair): the average value (φ1) of the predetermined domains was a value within a range of above 20 µm to 30 µm.
×(Bad): there were no 10 µm or more particles or the average value (φ1) of the predetermined domains was a value of above 30 µm.

### (2) Evaluation 2 (maximum particle size of predetermined domains: φ2)

An average value of domains (dispersion state) of the component (B) per unit area in an arbitrary cross section of the test piece was measured using an image analysis method, five domains were selected in descending order of size, and the average value (φ2) thereof was then calculated and evaluated according to the following criteria. ⊚(Very good): the maximum particle size of the predetermined domains was a value within a range of 10 to 30 µm.
O(Good): the maximum particle size of the predetermined domains was a value within a range of above 30 µm to 80 µm.
△(Fair): the maximum particle size of the predetermined domains was a value within a range of above 80 µm to 130 µm.
×(Bad): the maximum particle size of the predetermined domains was a value of below 10 µm or above 130 µm.

### (3) Evaluation 3 (area ratio of domains having a circle equivalent diameter of 10 µm or more: φ3)

Using an image analysis method, the area ratio of domains having a circle equivalent diameter of 10 µm or more derived from the component (B) relative to a unit area of 100% in an arbitrary cross section of the test piece was calculated and evaluated according to the following criteria.
⊚(Very good): the area ratio of the predetermined domains was a value within a range of 1.5 to 5%.
O(Good): the area ratio of the predetermined domains was a value within a range of 1 to below 1.5% or a value within a range of above 5% to 10%.
△(Fair): the area ratio of the predetermined domains was a value within a range of 0.5 to below 1% or a value within a range of above 10% to 20%.
×(Bad): the area ratio of the predetermined domains was a value of below 0.5% or a value of above 20%.

### (4) Evaluation 4 (abnormal noise generation)

Abnormal noise generation was evaluated under the following sliding conditions.

### Motion mode: unidirectional thrust rotation

Surface pressure: 13 MPa
Speed: 0.05 m/s
Mating material (when the main resin was POM): POM cylinder (φ25.6×φ20×L15)

Here, as the mating material, PBT was used when the main resin was PBT, PA66 was used when the main resin was PA66, and PC was used when the main resin was PC.
Lubrication condition: no lubrication
Sliding time: 30 sec.
⊚(Very good): no abnormal noise was heard at all.
O(Good): almost no abnormal noise was heard.
△(Fair): slight abnormal noise was heard.
×(Bad): significant abnormal noise was heard.

### (5) Evaluation 5 (coefficient of friction)

The coefficient of friction on the surface of the test piece was measured under the following test conditions, and the average coefficient of friction was calculated.
Motion mode: unidirectional thrust rotation
Surface pressure: 1 MPa
Speed: 0.05 m/s
Time: 3 minutes
Mating material (when the main resin was POM): POM cylinder (φ25.6×φ20×L15)

Here, as the mating material, PBT was used when the main resin was PBT, PA66 was used when the base resin was PA66, and PC was used when the main resin was PC.
Lubrication: no lubricant

### (6) Evaluation 6 (allowable surface pressure)

The allowable surface pressure on the surface of the test piece was measured under the following test conditions, and the allowable surface pressure was calculated.
Motion mode: unidirectional thrust rotation
Surface pressure: 1 MPa+0.5 MPa (every 3 minutes)
Speed: 0.5 m/s
Mating material (when the main resin was POM): POM cylinder (φ25.6×φ20×L15)

Here, as the mating material, PBT was used when the main resin was PBT, PA66 was used when the main resin was PA66, and PC was used when the main resin was PC.
Lubrication condition: no lubrication
Test stop condition: abnormal noise generation (for 10 seconds or longer)

### (7) Evaluation 7 (surface appearance evaluation)

The surface appearance of the plate-like sliding member was evaluated as follows. Here, molding defects included surface irregularities, peeling, flow marks, silver streaks and the like.
O(Good): no molding defects occurred.
×(Bad): molding defects occurred.

### [Examples 2 to 23]

In Examples 2 to 23, in the same manner as in Example 1, sliding resin compositions were prepared using formulation components shown in Table 1, and plate-like sliding members were prepared as test pieces and evaluated. The obtained results are shown in Table 2.

Here, regarding Example 5, FIG. 10 shows the relationship between the circle equivalent diameter (µm) of the domains derived from the component (B) measured by the image analysis method and the relative frequency (%) as an index of the particle size distribution.

That is, in FIG. 10, the horizontal axis represents the circle equivalent diameter (µm) of the domain derived from the component (B), and the vertical axis represents the relative frequency (%).

More specifically, when the horizontal axis for the circle equivalent diameter of such domains is 5 µm, it corresponds to the total relative frequency (%) of domains having a circle equivalent diameter of 0 µm or more and below 5 µm.

Further, when the horizontal axis is 10 µm, it corresponds to the total relative frequency (%) of domains having a circle equivalent diameter of 5 µm or more and below 10 µm.

When the horizontal axis is 15 µm, it corresponds to the total relative frequency (%) of domains having a circle equivalent diameter of 10 µm or more and below 15 µm.

When the horizontal axis is 20 µm, it corresponds to the total relative frequency (%) of domains having a circle equivalent diameter of 15 µm or more and below 20 µm.

When the horizontal axis is 25 µm, it corresponds to the total relative frequency (%) of domains having a circle equivalent diameter of 20 µm or more and below 25 µm.

When the horizontal axis is 30 µm, it corresponds to the total relative frequency (%) of domains having a circle equivalent diameter of 25 µm or more and below 30 µm.

Therefore, in Example 5, for example, the relative frequency of the domains having a circle equivalent diameter of below 5 µm was 98.5%, the relative frequency of the domains having a circle equivalent diameter of 5 µm or more and below 10 µm was 1.2%, and the relative frequency of the domains having a circle equivalent diameter of 10 µm or more was below 0.3%.

On the other hand, since the area ratio φ4 of the predetermined domains was 24%, it was inferred that domains having a circle equivalent diameter of 10 µm or more had a high area ratio of the predetermined domains relative to the total particle area in a unit area, it was also inferred that domains having a circle equivalent diameter of below 10 µm had a low area ratio, and thus it could be understood that the domains were formed in a non-uniformly dispersed state as a whole.

In addition, in Examples 2 to 23 and also in the above Example 1, it was confirmed that the relationship between the circle equivalent diameter (µm) of the domains derived from the component (B) and the relative frequency (%) exhibited the same tendency.

That is, as shown in FIG. 10, when a particle size distribution showing the relationship between the circle equivalent diameter (µm) of the domains derived from the component (B) and the relative frequency (%) was obtained, it could be recognized that the domains derived from the component (B) were in a non-uniform state.

### [Comparative Example 1]

In Comparative Example 1, a sliding resin composition and a resin sliding part were prepared and evaluated in the same manner as in Example 1 except that, in place of the olefin elastomer of Example 1, as the component (B), 5.3 parts by weight of EPDM (B6) ["MITSUI EPT-X-3012P," commercially available from Mitsui Chemicals Inc.], which has an ethylene content of 72 wt%, ENB as a diene component (a diene content of 3.6 wt%), and a Mooney viscosity ML(1+4) at 100°C of 15 was used.

However, in Comparative Example 1, since no domains having a circle equivalent diameter of 10 µm or more derived from the component (B) per unit area were observed, the value φ1 could not be measured.

### [Comparative Example 2]

In Comparative Example 2, a sliding resin composition and a resin sliding part were prepared and evaluated in the same manner as in Example 1 except that, in place of the olefin elastomer of Example 1, no component (B) was added at all, and 7.5 parts by weight of carbon black (E1) (average particle size: 2.5 µm), which is a carbon material as the component (E), was used.

However, in Comparative Example 2, no domains having a circle equivalent diameter of 10 µm or more derived from the component (B) per unit area were observed.

### [Comparative Example 3]

In Comparative Example 3, a sliding resin composition and a resin sliding part were prepared and evaluated in the same manner as in Example 1 except that 5.4 parts by weight of EPDM (B6) was used in place of the olefin elastomer of Example 1, and 2.2 parts by weight of carbon black (E1) was used as the component (E).

However, in Comparative Example 3, no domains having a circle equivalent diameter of 10 µm or more derived from the component (B) per unit area were observed.

Here, in Comparative Example 3, FIG. 11 shows the relationship between the circle equivalent diameter (µm) of the domains derived from the component (B) measured by the image analysis method and the relative frequency (%) as an index of the particle size distribution.

That is, similar to FIG. 10, in FIG. 11, the horizontal axis represents the circle equivalent diameter (µm) of the domains derived from the component (B) at 5 µm intervals, and the vertical axis represents the relative frequency (%).

Therefore, in the case of Comparative Example 3, for example, when the circle equivalent diameter of the domains was in a range of 5 µm to 20 µm, the total relative frequency of the domains having a circle equivalent diameter of below 5 µm was 100%.

It could be understood that, as the circle equivalent diameter of the domains increases, the total relative frequency (%) decreases rapidly, and when it reaches 5 µm or more, the total relative frequency of the domains decreases to 0%.

In addition, in Comparative Example 1, it was confirmed that the relationship between the circle equivalent diameter (µm) of the domains derived from the component (B) and the relative frequency (%) exhibited the same tendency.

That is, as shown in FIG. 11, when a particle size distribution showing the relationship between the circle equivalent diameter (µm) of the domains derived from the component (B) and the relative frequency (%) was obtained, it could be recognized that the domains derived from the component (B) were in a uniform state.

### [Comparative Examples 4 to 7]

In Comparative Examples 4 to 7, sliding resin compositions were prepared in the same manner as in Example 1 except that formulation components shown in Table 1 were used, and plate-like sliding members were prepared as test pieces and evaluated.

**[Table 1]**

| | (A) Component Main component (POM, etc.) | (B) Component EPDM, etc. | (C) Component Lubricant | (D) Component Polyolefin resin | (E) Component Carbon material |
|---|---|---|---|---|---|
| Example 1 | A1 | B1 | - | D1 | - |
| | 100 | 5.3 | | 2.2 | |
| Example 2 | A1 | B2 | - | - | - |
| | 100 | 5.3 | | | |
| Example 3 | A1 | B3 | - | - | - |
| | 100 | 5.3 | | | |
| Example 4 | A1 | B4 | - | D1 | E1 |
| | 100 | 5.4 | | 2.2 | 0.5 |
| Example 5 | A1 | B5 | - | D1 | E1 |
| | 100 | 5.4 | | 2.2 | 0.5 |
| Example 6 | A1 | B1 | - | - | E1 |
| | 100 | 5.3 | | | 0.5 |
| Example 7 | A1 | B1 | - | - | E2 |
| | 100 | 5.3 | | | 0.5 |
| Example 8 | A1 | B1 | C1 | - | - |
| | 100 | 5.3 | 1.1 | | |
| Example 9 | A1 | B1 | C2 | - | - |
| | 100 | 5.3 | 1.1 | | |
| Example 10 | A2 | B1 | C1 | - | - |
| | 100 | 5.3 | 1.1 | | |
| Example 11 | A3 | B2 | C1 | - | - |
| | 100 | 5.3 | 1.1 | | |
| Example 12 | A1 | B1 | C1 | D2 | E1 |
| | 100 | 5.5 | 1.1 | 2.2 | 0.5 |
| Example 13 | A1 | B1 | C1 | D1 | E1 |
| | 100 | 1 | 1.1 | 2.1 | 0.5 |
| Example 14 | A1 | B2 | C1 | - | E1 |
| | 100 | 68.4 | 1.8 | | 0.9 |
| Example 15 | A1 | B7 | - | D1 | - |
| | 100 | 5.4 | | 2.2 | |
| Example 16 | A1 | B8 | - | D2 | - |
| | 100 | 5.4 | | 2.2 | |
| Example 17 | A1 | B9 | - | - | - |
| | 100 | 5.3 | | | |
| Example 18 | A1 | B10 | - | - | - |
| | 100 | 5.3 | | | |
| Example 19 | A1 | B11 | - | - | - |
| | 100 | 5.3 | | | |
| Example 20 | A4 | B1 | - | - | - |
| | 100 | 5.3 | | | |
| Example 21 | A2 | B2 | - | - | - |
| | 100 | 25 | | | |
| Example 22 | A3 | B2 | - | - | - |
| | 100 | 25 | | | |
| Example 23 | A4 | B2 | - | - | - |
| | 100 | 25 | | | |
| Comparative Example 1 | A1 | B6 | - | - | - |
| | 100 | 5.3 | | | |
| Comparative Example 2 | A1 | - | - | D1 | E1 |
| | 100 | | | 7.6 | 0.5 |
| Comparative Example 3 | A1 | B6 | - | D1 | E1 |
| | 100 | 5.4 | | 2.2 | 0.5 |
| Comparative Example 4 | A1 | B12 | - | - | - |
| | 100 | 5.3 | | | |
| Comparative Example 5 | A1 | B13 | - | - | - |
| | 100 | 5.3 | | | |
| Comparative Example 6 | A1 | B2 | - | - | - |
| | 100 | 75 | | | |
| Comparative | A3 | B3 | | | |
| Example 7 | 100 | 42.9 | - | - | - |

**[Table 2]**

| | φ1 (um) | φ2 (um) | φ3 (%) | φ4 (%) | Eva 1 (φ1) | Eva 2 (φ2) | Eva 3 (φ3) | Eva 4 (Abnormal noise) | Eva 5 (Coefficient of friction) | Eva 6 (Allowable surface pressure) | Eva 7 (Appearance) |
|---|---|---|---|---|---|---|---|---|---|---|---|
| Example 1 | 14 | 17 | 2.8 | 54 | ⊚ | ⊚ | ⊚ | ⊚ | 0.15 | 4 | ○ |
| Example 2 | 20 | 77 | 4.3 | 66 | ○ | ○ | ⊚ | ⊚ | 0.14 | 4 | ○ |
| Example 3 | 21 | 76 | 4.3 | 81 | Δ | ○ | ⊚ | ○ | 0.22 | 3 | ○ |
| Example 4 | 12 | 12 | 3.3 | 16 | ⊚ | ⊚ | ⊚ | ⊚ | 0.18 | 4 | ○ |
| Example 5 | 17 | 17 | 2.3 | 24 | ○ | ⊚ | ⊚ | ⊚ | 0.12 | 4 | ○ |
| Example 6 | 13 | 15 | 2.7 | 50 | ⊚ | ⊚ | ⊚ | ⊚ | 0.15 | 4 | ○ |
| Example 7 | 14 | 18 | 3 | 60 | ⊚ | ⊚ | ⊚ | ⊚ | 0.15 | 4 | ○ |
| Example 8 | 12 | 14 | 2.6 | 48 | ⊚ | ⊚ | ⊚ | ⊚ | 0.14 | 4.5 | ○ |
| Example 9 | 13 | 14 | 2.5 | 58 | ⊚ | ⊚ | ⊚ | ⊚ | 0.14 | 4.5 | ○ |
| Example 10 | 12 | 18 | 0.8 | 7 | ⊚ | ⊚ | Δ | ⊚ | 0.58 | 5 | ○ |
| Example 11 | 26 | 103 | 13 | 88 | Δ | Δ | Δ | ⊚ | 0.4 | 6 | ○ |
| Example 12 | 11 | 13 | 1.8 | 38 | ⊚ | ⊚ | ⊚ | ⊚ | 0.11 | 4.5 | ○ |
| Example 13 | 15 | 15 | 0.5 | 9 | ⊚ | ⊚ | Δ | ○ | 0.21 | 3 | ○ |
| Example 14 | 16 | 55 | 9.7 | 62 | ○ | ○ | ○ | ⊚ | 0.2 | 6.5 | ○ |
| Example 15 | 15 | 15 | 3.1 | 28 | ⊚ | ⊚ | ⊚ | ⊚ | 0.13 | 3.5 | ○ |
| Example 16 | 12 | 12 | 3.5 | 13 | ⊚ | ⊚ | ⊚ | ⊚ | 0.16 | 4.5 | ○ |
| Example 17 | 22 | 68 | 4.8 | 79 | Δ | ○ | ⊚ | ○ | 0.19 | 3.5 | ○ |
| Example 18 | 17 | 21 | 4.4 | 21 | ○ | ⊚ | ⊚ | ○ | 0.21 | 3.5 | ○ |
| Example 19 | 15 | 18 | 5.1 | 18 | ⊚ | ⊚ | ○ | ⊚ | 0.23 | 4 | ○ |
| Example 20 | 11 | 12 | 3.3 | 11 | ⊚ | ⊚ | ⊚ | ⊚ | 0.21 | 9.5 | ○ |
| Example 21 | 18 | 39 | 6.2 | 58 | ⊚ | ○ | ○ | ⊚ | 0.61 | 5.5 | ○ |
| Example 22 | 28 | 129 | 19 | 94 | Δ | Δ | Δ | ⊚ | 0.45 | 6 | ○ |
| Example 23 | 16 | 31 | 5.8 | 72 | ○ | ○ | ○ | ⊚ | 0.2 | 9.5 | ○ |
| Comparative Example 1 | - | 4.6 | 0 | 0 | × | × | × | Δ | 0.22 | 2.5 | ○ |
| Comparative Example 2 | - | 3.3 | 0 | 0 | × | × | × | × | 0.31 | 1.5 | ○ |
| Comparative Example 3 | - | 3.5 | 0 | 0 | × | × | × | Δ | 0.22 | 2 | ○ |
| Comparative Example 4 | - | 4.9 | 0 | 0 | × | × | × | Δ | 0.21 | 2.5 | ○ |
| Comparative Example 5 | - | 3.1 | 0 | 0 | × | × | × | × | 0.29 | 1.5 | ○ |
| Comparative Example 6 | 21 | 66 | 21 | 69 | Δ | ○ | × | ⊚ | 0.24 | 6.5 | × |
| Comparative Example 7 | 34 | 138 | 23 | 97 | × | × | × | ⊚ | 0.5 | 5 | × |

| | | | | | | | | | | | |
|---|---|---|---|---|---|---|---|---|---|---|---|
| Φ1: Average value of the predetermined domains (µm) Φ2: Maximum particle size of the predetermined domains (µm) Φ3: Area ratio of the predetermined domains (%) | | | | | | | | | | | |

### Industrial Applicability

As described above, according to the sliding resin composition of the present invention, various resins are used as the main resin for the component (A), and a predetermined amount of an olefin elastomer or the like is added as the component (B), which are dispersed in a predetermined non-uniform state to form domains having a predetermined structure.

Therefore, when the sliding member derived therefrom is formed, the generation of abnormal noise (creaking noise) could be significantly reduced.

That is, when the formulation components are dispersed in a predetermined non-uniform state to form a sliding resin composition, which is then processed into a predetermined sliding member, it is possible to provide a sliding member which exhibits favorable sliding properties and the like over a long period, with the sliding properties of a coefficient of friction and an amount of wear being equal to or less than predetermined values, and in which the generation of creaking noise caused by stick-slip is prevented as much as possible.

Therefore, the sliding resin composition of the present invention could be used in a wide range of fields as various sliding members, and particularly, it could be suitably used by processing into sliding members such as bearings for automobile parts, electrical and electronic products, and office machines, which are always assumed to be used under dry conditions.

## Claims

1. A sliding resin composition comprising at least the following components (A) and (B),
wherein, when per unit area, domains having a circle equivalent diameter of 10 µm or more that are derived from the component (B) and non-uniformly dispersed in the component (A) are selected, an average value (φ1) of the circle equivalent diameters of the selected domains is a value within a range of 10 to 30 µm:
(A) at least one main resin selected from the group consisting of a polyacetal resin, a polyamide resin, a polybutylene terephthalate resin and a polycarbonate resin: 100 parts by weight.
(B) an olefin elastomer and a styrene elastomer, or either one of the elastomers: 1 to 70 parts by weight.

2. The sliding resin composition according to claim 1, wherein, when per unit area, among the domains derived from the component (B), at least five domains n1 to n5 are selected in descending order of circle equivalent diameter, an average value (φ2) of the circle equivalent diameters of the selected domains is a value within a range of 10 to 130 µm.

3. The sliding resin composition according to claim 1, wherein, per unit area, an area ratio (φ3) of the domains having a circle equivalent diameter of 10 µm or more derived from the component (B) is a value within a range of 0.5 to 20%.

4. The sliding resin composition according to claim 1, further comprising, as a component (C), a lubricant agent,
wherein the amount of the component (C) added with respect to 100 parts by weight of the component (A) is a value within a range of 0.1 to 10 parts by weight.

5. The sliding resin composition according to claim 1, further comprising, as a component (E), a carbon material,
wherein the amount of the component (E) added with respect to 100 parts by weight of the component (A) is a value within a range of 0.01 to 10 parts by weight.

6. The sliding resin composition according to claim 1, wherein the melt flow rate of the component (A) is a value within a range of 3 to 100 g/10 min.

7. The sliding resin composition according to claim 1,
wherein the component (B) is at least one resin selected from the group consisting of an ethylene-propylene copolymer (EPM), an ethylene-propylene-diene copolymer (EPDM), an ethylene-1-butene copolymer (EBR), an ethylene-vinyl acetate copolymer (EVA), an olefin-ethylene butylene-olefin block copolymer (CEBC), a styrene-butadiene copolymer (SBR), and a styrene-ethylene butylene-styrene copolymer (SEBS), and the resin is any resin having a Mooney viscosity ML(1+4) at 100°C within a range of 40 to 110, a Mooney viscosity ML(1+4) at 125°C within a range of 20 to 80, or a melt flow rate (190°C, 2.16 kg) within a range of below 3 g/10 min.

8. A sliding resin member comprising, as a constituent component, a sliding resin composition containing the following components (A) and (B) and in which at least domains having a circle equivalent diameter of 10 µm or more derived from the component (B) are non-uniformly dispersed in the component (A), wherein, when per unit area, domains having a circle equivalent diameter of 10 µm or more derived from the component (B) are selected, an average value (φ1) of the circle equivalent diameters of the selected domains is a value within a range of 10 to 30 µm:
(A) at least one main resin selected from the group consisting of a polyacetal resin, a polyamide resin, a polybutylene terephthalate resin and a polycarbonate resin: 100 parts by weight
(B) an olefin elastomer and a styrene elastomer, or either one of the elastomers: 1 to 70 parts by weight.
